(19) Europäisches Patentamt
European Patent Office
Office européen des brevets

(11) EP 3 512 920 B1

(12) **EUROPEAN PATENT SPECIFICATION**

(45) Date of publication and mention of the grant of the patent:
**04.11.2020 Bulletin 2020/45**

(21) Application number: **17761903.8**

(22) Date of filing: **11.09.2017**

(51) Int Cl.:
***C09K 19/02*** (2006.01) ***C09K 19/04*** (2006.01)

(86) International application number:
**PCT/EP2017/072674**

(87) International publication number:
**WO 2018/050573 (22.03.2018 Gazette 2018/12)**

(54) **LIQUID CRYSTAL MEDIUM AND LIQUID CRYSTAL DEVICE**

FLÜSSIGKRISTALLMEDIUM UND FLÜSSIGKRISTALLVORRICHTUNG

MILIEU LIQUIDE CRISTALIN ET DISPOSITIF À BASE DE CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.09.2016 EP 16188677**

(43) Date of publication of application:
**24.07.2019 Bulletin 2019/30**

(73) Proprietor: **Merck Patent GmbH**
**64293 Darmstadt (DE)**

(72) Inventor: **SIEMIANOWSKI, Simon**
**64380 Rossdorf (DE)**

(56) References cited:
**WO-A1-2015/074737**
**WO-A1-2016/070952**
**WO-A1-2016/116123**
**WO-A1-2016/116124**
**WO-A1-2016/116254**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 512 920 B1

## Description

The invention relates to a liquid crystal medium comprising one or more compounds of formula I,

$$R^{11}\text{-}A^{11}\text{-}A^{12}\text{-}(CH_2)_s\text{-}A^{13}\text{-}A^{14}\text{-}R^{12} \qquad I$$

in a concentration of up to 30% or less,
and one or more compounds of formula II,

$$R^{21}\text{-}A^{21}\text{-}A^{22}\text{-}(A^{23})_u\text{-}Z^{21}\text{-}(CH_2)_t\text{-}Z^{22}\text{-}A^{24}\text{-}A^{25}\text{-}A^{26}\text{-}R^{22} \qquad II$$

in a concentration of 25% or more,
wherein $R^{11}$ to $R^{22}$, $A^{11}$ to $A^{26}$, $Z^{21}$, $Z^{22}$, s, t, and u have one of the meanings as given herein below, to a method of production of such a media, to the use of such media in liquid crystal devices, in particular in flexoelectric liquid crystal devices, and to a flexoelectric liquid crystal device comprising a medium according to the present invention.

### Background and Prior Art

The flexoelectric effect is described, for example, by Chandrasekhar, "Liquid Crystals", 2nd edition, Cambridge University Press (1992) and P.G. deGennes et al., "The Physics of Liquid Crystals", 2nd edition, Oxford Science Publications (1995).

Flexoelectric devices utilizing the flexoelectric effect and Liquid crystal media that are especially suitable for flexoelectric devices and are known from WO 2015/074737, WO 2016/070952, WO 2016/116254, WO 2016/116124, WO 2016/116123, EP 0 971 016, GB 2 356 629 and Coles, H.J., Musgrave, B., Coles, M.J., and Willmott, J., J. Mater. Chem., 11, p. 2709-2716 (2001).

In addition to these compositions also LC media are known, for example from WO 2013/004333 A1 or WO 2013/174481 A1, which exhibit in addition to the conventional nematic phase an additional second nematic phase. This separate nematic phase is also known as the twist bend nematic phase ($N_{TB}$) and is exclusive to bent core or bimesogenic compounds having very low bend elastic constant ($k_{33}$) values.

The elucidation of the $N_{TB}$ phase has a lot of interest from academia such as for example disclosed by Luckhurst et al. in J. Mat Chem. 2011, 21, 12303 - 12308, or Luckhurst et al. J. Phys. Chem. B, 2013, 117 (21), pp 6547-6557 or Selinger Phys. Rev. E 87, 52503.

However, as of yet, there are no stable media that exhibit the $N_{TB}$ phase at room temperature or even exhibit a good stability against crystallisation. Accordingly, there is a great demand for new LC media, which exhibit, preferably at the same time:

- a favourable broad $N_{TB}$ phase from above room temperature down to low temperatures,
- a favourable stability against crystallisation in the bulk as well in LC cells, especially at lower temperatures.

In addition to those requirements, the LC media should exhibit low melting points, broad chiral nematic phase ranges, short temperature independent pitch lengths and high flexoelectric coefficients. Other aims of the present invention are immediately evident to the person skilled in the art from the following detailed description.

Surprisingly, the inventors have found out that the one or more of the above-mentioned aims can be achieved by providing a medium according to claim 1.

In particular, the LC media in accordance with the present invention are favourable stable in cells and in the bulk at room temperature. At the same time, the media exhibit broad twist-bend nematic ($N_{TB}$) phase from above room temperature down to low temperatures.

### Terms and Definitions

The term "liquid crystal", "mesomorphic compound", or "mesogenic compound" (also shortly referred to as "mesogen") means a compound that under suitable conditions of temperature, pressure and concentration can exist as a mesophase (nematic, smectic, etc.) or in particular as a LC phase. Non-amphiphilic mesogenic compounds comprise for example one or more calamitic, banana-shaped or discotic mesogenic groups.

The term "mesogenic group" means in this context, a group with the ability to induce liquid crystal (LC) phase behaviour. The compounds comprising mesogenic groups do not necessarily have to exhibit an LC phase themselves. It is also possible that they show LC phase behaviour only in mixtures with other compounds. For the sake of simplicity, the term "liquid crystal" is used hereinafter for both mesogenic and LC materials.

Throughout the application, unless stated explicitly otherwise, the term "aryl and heteroaryl groups" encompass groups, which can be monocyclic or polycyclic, i.e. they can have one ring (such as, for example, phenyl) or two or more rings, which may also be fused (such as, for example, naphthyl) or covalently linked (such as, for example, biphenyl), or contain a combination of fused and linked rings.

Heteroaryl groups contain one or more heteroatoms, preferably selected from O, N, S and Se. Particular preference is given to mono-, bi- or tricyclic aryl groups having 6 to 25 C atoms and mono-, bi- or tricyclic heteroaryl groups having 2 to 25 C atoms, which optionally contain fused rings, and which are optionally substituted. Preference is furthermore given to 5 , 6 or 7-membered aryl and heteroaryl groups, in which, in addition, one or more CH groups may be replaced by N, S or O in such a way that O atoms and/or S atoms are not linked directly to one another. Preferred aryl groups are, for example, phenyl, biphenyl, terphenyl, [1,1'-3',1"]terphenyl-2'-yl, naphthyl, anthracene, binaphthyl, phenanthrene, pyrene, dihydropyrene, chrysene, perylene, tetracene, pentacene, benzopyrene, fluorene, indene, indenofluorene, spirobifluorene, more preferably 1,4- phenylene, 4,4'-biphenylene, 1, 4-tephenylene.

Preferred heteroaryl groups are, for example, 5 membered rings, such as pyrrole, pyrazole, imidazole, 1,2,3-triazole, 1,2,4-triazole, tetrazole, furan, thiophene, selenophene, oxazole, isoxazole, 1,2 thiazole, 1,3-thiazole, 1,2,3-oxadiazole, 1,2,4 oxadiazole, 1,2,5-oxadiazole, 1,3,4-oxadiazole, 1,2,3-thiadiazole, 1,2,4-thiadiazole, 1,2,5-thiadiazole, 1,3,4-thiadiazole, 6 membered rings, such as pyridine, pyridazine, pyrimidine, pyrazine, 1,3,5-triazine, 1,2,4-triazine, 1,2,3-triazine, 1,2,4,5-tetrazine, 1,2,3,4-tetrazine, 1,2,3,5-tetrazine, or condensed groups, such as indole, iso-indole, indolizine, indazole, benzimidazole, benzotriazole, purine, naphth-imidazole, phenanthrimidazole, pyridimidazole, pyrazinimidazole, quinoxalinimidazole, benzoxazole, naphthoxazole, anthroxazole, phen-anthroxazole, isoxazole, benzothiazole, benzofuran, isobenzofuran, dibenzofuran, quinoline, isoquinoline, pteridine, benzo-5,6-quinoline, benzo-6,7-quino¬line, benzo-7,8-quinoline, benzoisoquinoline, acridine, phenothiazine, phenoxazine, benzopyridazine, benzopyrimidine, quinoxaline, phenazine, naphthyridine, azacarbazole, benzocarboline, phenanthridine, phenanthroline, thieno[2,3b]thiophene, thieno[3,2b]-thiophene, dithienothiophene, isobenzothiophene, dibenzothiophene, benzothiadiazothiophene, or combinations of these groups. The heteroaryl groups may also be substituted by alkyl, alkoxy, thioalkyl, fluorine, fluoroalkyl or further aryl or heteroaryl groups.

In the context of this application, the term "(non-aromatic) alicyclic and heterocyclic groups" encompass both saturated rings, i.e. those that contain exclusively single bonds, and partially unsaturated rings, i.e. those that may also contain multiple bonds. Heterocyclic rings contain one or more heteroatoms, preferably selected from Si, O, N, S and Se. The (non-aromatic) alicyclic and heterocyclic groups can be monocyclic, i.e. contain only one ring (such as, for example, cyclohexane), or polycyclic, i.e. contain a plurality of rings (such as, for example, decahydro-naphthalene or bicyclooctane). Particular preference is given to saturated groups. Preference is furthermore given to mono-, bi- or tricyclic groups having 3 to 25 C atoms, which optionally contain fused rings and that are optionally substituted. Preference is furthermore given to 5-, 6-, 7- or 8-membered carbocyclic groups in which, in addition, one or more C atoms may be replaced by Si and/or one or more CH groups may be replaced by N and/or one or more non-adjacent CH2 groups may be replaced by -O- and/or -S-. Preferred alicyclic and heterocyclic groups are, for example, 5-membered groups, such as cyclopentane, tetrahydrofuran, tetrahydrothiofuran, pyrrolidine, 6-membered groups, such as cyclohexane, silinane, cyclohexene, tetrahydropyran, tetrahydrothiopyran, 1,3-dioxane, 1,3-dithiane, piperidine, 7-membered groups, such as cycloheptane, and fused groups, such as tetrahydronaphthalene, decahydronaphthalene, indane, bicyclo[1.1.1]-pentane-1,3-diyl, bicyclo[2.2.2]octane-1,4-diyl, spiro[3.3]heptane-2,6-diyl, octahydro-4,7-methanoindane-2,5-diyl, more preferably 1,4-cyclohexylene 4,4'-bicyclohexylene, 3,17-hexadecahydro-cyclopenta[a]phenanthrene, optionally being substituted by one or more identical or different groups L. Especially preferred aryl-, heteroaryl-, alicyclic- and heterocyclic groups are 1,4-phenylene, 4,4'-biphenylene, 1, 4-terphenylene, 1,4-cyclohexylene, 4,4'- bicyclohexylene, and 3,17-hexadecahydro-cyclopenta[a]-phenanthrene, optionally being substituted by one or more identical or different groups L.

Preferred substituents of the above-mentioned aryl-, heteroaryl-, alicyclic- and heterocyclic groups (L) are, for example, solubility-promoting groups, such as alkyl or alkoxy and electron-withdrawing groups, such as fluorine, nitro or nitrile.

Particularly preferred substituents are, for example, halogen, CN, NO2, CH3, C2H5, OCH3, OC2H5, COCH3, COC2H5, COOCH3, COOC2H5, CF3, OCF3, OCHF2 or OC2F5.

Above and below "halogen" denotes F, Cl, Br or I.

Above and below, the terms "alkyl", "aryl", "heteroaryl", etc., also encompass polyvalent groups, for example alkylene, arylene, heteroarylene, etc.

The term "aryl" denotes an aromatic carbon group or a group derived there from.

The term "heteroaryl" denotes "aryl" in accordance with the above definition containing one or more heteroatoms.

Preferred alkyl groups are, for example, methyl, ethyl, n propyl, isopropyl, n butyl, isobutyl, s butyl, t butyl, 2 methylbutyl, n pentyl, s pentyl, cyclopentyl, n hexyl, cyclohexyl, 2 ethylhexyl, n heptyl, cycloheptyl, n octyl, cyclooctyl, n nonyl, n decyl, n undecyl, n dodecyl, dodecanyl, trifluoromethyl, perfluoro-n-butyl, 2,2,2-trifluoroethyl, perfluorooctyl, perfluorohexyl, etc.

Preferred alkoxy groups are, for example, methoxy, ethoxy, 2-methoxy-ethoxy, n-propoxy, i-propoxy, n-butoxy,

i-butoxy, s-butoxy, t-butoxy, 2-methylbutoxy, n-pentoxy, n-hexoxy, n-heptoxy, n-octoxy, n-nonoxy, n-decoxy, n-undecoxy, n-dodecoxy.

Preferred alkenyl groups are, for example, ethenyl, propenyl, butenyl, pentenyl, cyclopentenyl, hexenyl, cyclohexenyl, heptenyl, cycloheptenyl, octenyl, cyclooctenyl.

Preferred alkynyl groups are, for example, ethynyl, propynyl, butynyl, pentynyl, hexynyl, octynyl.

Preferred amino groups are, for example, dimethylamino, methylamino, methylphenylamino, phenylamino.

The term "chiral" in general is used to describe an object that is non-superimposable on its mirror image.

"Achiral" (non- chiral) objects are objects that are identical to their mirror image.

The terms "chiral nematic" and "cholesteric" are used synonymously in this application, unless explicitly stated otherwise.

The term "bimesogenic compound" relates to compounds comprising two mesogenic groups in the molecule. Just like normal mesogens, they can form many mesophases, depending on their structure. In particular, bimesogenic compound may induce a second nematic phase, when added to a nematic liquid crystal medium. Bimesogenic compounds are also known as "dimeric liquid crystals".

The term "director" is known in prior art and means the preferred orientation direction of the long molecular axes (in case of calamitic compounds) or short molecular axes (in case of discotic compounds) of the liquid-crystalline molecules. In case of uniaxial ordering of such anisotropic molecules, the director is the axis of anisotropy.

The term "alignment" or "orientation" relates to alignment (orientation ordering) of anisotropic units of material such as small molecules or fragments of big molecules in a common direction named "alignment direction". In an aligned layer of liquid-crystalline material, the liquid-crystalline director coincides with the alignment direction so that the alignment direction corresponds to the direction of the anisotropy axis of the material.

The term "planar orientation/alignment", for example in a layer of an liquid-crystalline material, means that the long molecular axes (in case of calamitic compounds) or the short molecular axes (in case of discotic compounds) of a proportion of the liquid-crystalline molecules are oriented substantially parallel (about 180°) to the plane of the layer.

The term "homeotropic orientation/alignment", for example in a layer of a liquid-crystalline material, means that the long molecular axes (in case of calamitic compounds) or the short molecular axes (in case of discotic compounds) of a proportion of the liquid-crystalline molecules are oriented at an angle $\theta$ ("tilt angle") between about 80° to 90° relative to the plane of the layer.

The terms "uniform orientation" or "uniform alignment" of an liquid-crystalline material, for example in a layer of the material, mean that the long molecular axes (in case of calamitic compounds) or the short molecular axes (in case of discotic compounds) of the liquid-crystalline molecules are oriented substantially in the same direction. In other words, the lines of liquid-crystalline director are parallel.

The wavelength of light generally referred to in this application is 550 nm, unless explicitly specified otherwise.

The birefringence $\Delta n$ herein is defined by the following equation

$$\Delta n = n_e - n_o$$

wherein $n_e$ is the extraordinary refractive index and $n_o$ is the ordinary refractive index, and the average refractive index $n_{av.}$ is given by the following equation

$$n_{av.} = [(2\ n_o^2 + n_e^2)/3]^{1/2}$$

The extraordinary refractive index $n_e$ and the ordinary refractive index $n_o$ can be measured using an Abbe refractometer.

In the present application the term "dielectrically positive" is used for compounds or components with $\Delta\varepsilon > 3.0$, "dielectrically neutral" with $-1.5 \leq \Delta\varepsilon \leq 3.0$ and "dielectrically negative" with $\Delta\varepsilon < -1.5$. $\Delta\varepsilon$ is determined at a frequency of 1 kHz and at 20 °C. The dielectric anisotropy of the respective compound is determined from the results of a solution of 10 % of the respective individual compound in a nematic host mixture. In case the solubility of the respective compound in the host medium is less than 10 % its concentration is reduced by a factor of 2 until the resultant medium is stable enough at least to allow the determination of its properties. Preferably, the concentration is kept at least at 5 %, however, in order to keep the significance of the results a high as possible. The capacitance of the test mixtures are determined both in a cell with homeotropic and with homogeneous alignment. The cell gap of both types of cells is approximately 20 $\mu$m. The voltage applied is a rectangular wave with a frequency of 1 kHz and a root mean square value typically of 0.5 V to 1.0 V; however, it is always selected to be below the capacitive threshold of the respective test mixture.

$\Delta\varepsilon$ is defined as $(\varepsilon\| - \varepsilon_\perp)$, whereas $\varepsilon_{av.}$ is $(\varepsilon\| + 2\ \varepsilon_\perp) / 3$. The dielectric permittivity of the compounds is determined from the change of the respective values of a host medium upon addition of the compounds of interest. The values are

extrapolated to a concentration of the compounds of interest of 100 %. A typical host medium is ZLI-4792 or BL-087 both commercially available from Merck, Darmstadt.

For the present invention,

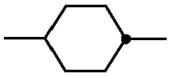 , 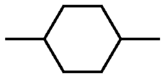 , 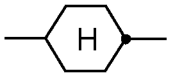 and 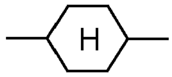

denote 1,4-cyclohexylene, preferably in trans-configuration, and

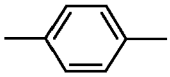 and 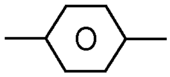

denote 1,4-phenylene.

The term "room temperature" or RT denotes 21°C.

Furthermore, the definitions as given in C. Tschierske, G. Pelzl and S. Diele, Angew. Chem. 2004, 116, 6340-6368 shall apply to non-defined terms related to liquid crystal materials in the instant application.

<u>Detailed description</u>

The invention relates to a medium comprising one or more compounds of formula I,

$$R^{11}\text{-}A^{11}\text{-}A^{12}\text{-}(CH_2)_s\text{-}A^{13}\text{-}A^{14}\text{-}R^{12} \qquad \text{I}$$

in a concentration of up to 30% or less
and one or more compounds of formula II,

$$R^{21}\text{-}A^{21}\text{-}A^{22}\text{-}(A^{23})_u\text{-}Z^{21}\text{-}(CH_2)_t\text{-}Z^{22}\text{-}A^{24}\text{-}A^{25}\text{-}A^{26}\text{-}R^{22} \qquad \text{II}$$

in a concentration of 25% or more, wherein

$R^{11}$ to $R^{22}$ are each independently H, F, Cl, CN, NCS or a straight-chain or branched alkyl group, which may be unsubstituted, mono- or polysubstituted by halogen or CN, it being also possible for one or more non-adjacent $CH_2$ groups to be replaced, in each occurrence independently from one another, by -O-, -S-, -NH-, -N($CH_3$)-, -CO-, -COO-, -OCO-, -O-CO-O-, -S-CO-, -CO-S-, -CH=CH-, -CH=CF-, -CF=CF- or -C=C- in such a manner that oxygen atoms are not linked directly to one another, preferably F, Cl, CN, a straight-chain or branched alkyl or alkoxy group which may be unsubstituted, mono- or polysubstituted by halogen or CN, more preferably F, CN, or $OCF_3$,

$A^{11}$ to $A^{26}$, are each independently in each occurrence 1,4-phenylene, wherein in addition one or more CH groups may be replaced by N, trans-1,4-cyclo-hexylene in which, in addition, one or two non-adjacent $CH_2$ groups may be replaced by O and/or S, 1,4-cyclohexenylene, 1,4-bicyclo-(2,2,2)-octylene, piperidine-1,4-diyl, naphthalene-2,6-diyl, decahydro-naphthalene-2,6-diyl, 1,2,3,4-tetrahydro-naphthalene-2,6-diyl, cyclobutane-1,3-diyl, spiro[3.3]heptane-2,6-diyl or dispiro[3.1.3.1] decane-2,8-diyl, it being possible for all these groups to be unsubstituted, mono-, di-, tri- or tetrasubstituted with F, Cl, CN or alkyl, alkoxy, alkylcarbonyl or alkoxycarbonyl groups, wherein one or more H atoms may be substituted by F or Cl, preferably each independently in each occurrence 1,4-phenylene, wherein in addition one or more CH groups may be replaced by N, or trans-1,4-cyclo-hexylene in which, in addition, one or two non-adjacent $CH_2$ groups may be replaced by O and/or S, it being possible for both ring groups to be unsubstituted, mono-, di-, tri- or tetrasubstituted with F, Cl, CN or alkyl, alkoxy, alkylcarbonyl or alkoxycarbonyl groups, wherein one or more H atoms may be substituted by F or Cl,

$Z^{21}$ and $Z^{22}$ are each independently in each occurrence, -COO-, -OCO-, -O-CO-O-, -$OCH_2$-, -$CH_2O$-, -$OCF_2$-, -$CF_2O$-, -$CH_2CH_2$-, -$(CH_2)_4$-, -$CF_2CF_2$-, -CH=CH-, -CF=CF-, -CH=CH-COO-, -OCO-CH=CH- or -C≡C-, optionally substituted with one or more of F, S and/or Si, preferably -COO-, -OCO-, or -O-CO-O-, more preferably

-COO-, or -OCO-,

s and t denotes an integer from 1 to 15, preferably an odd (i.e. uneven) integer and, more preferably 3, 5, 7 or 9, and

u denotes 0 or 1, preferably 0.

Preferred compounds of formula I are selected from compounds in which the groups ($-A^{11}-A^{12}-$) and ($-A^{13}-A^{14}-$) are each and independently selected from the following groups

| | |
|---|---|
| -Phe-Phe- | MG-1 |
| -Phe-Cyc- | MG-2 |
| -PheL-PheL- | MG-3 |
| -Phe-PheL- | MG-4 |
| -PheL-Phe- | MG-5 |
| -PheL-Cyc- | MG-6 |
| -Cyc-PheL- | MG-7 |
| -Cyc-Cyc- | MG-8 |

Wherein,

Phe in these groups is 1,4-phenylene,

PheL is a 1,4-phenylene group which is substituted by 1 to 4 groups L, with L being preferably F, Cl, CN, OH, $NO_2$ or an optionally fluorinated alkyl, alkoxy or alkanoyl group with 1 to 7 C atoms, very preferably F, Cl, CN, OH, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$, in particular F, Cl, CN, $CH_3$, $C_2H_5$, $OCH_3$, $COCH_3$ and $OCF_3$, most preferably F, Cl, $CH_3$, $OCH_3$ and $COCH_3$ and

Cyc is 1,4-cyclohexylene.

Preferred are compounds of formula I wherein ($-A^{11}-A^{12}-$) and ($-A^{13}-A^{14}-$) in formula I are identical or mirror images.

In addition, compounds of formula I containing an achiral branched group $R^{11}$ and/or $R^{12}$ may occasionally be of importance, for example, due to a reduction in the tendency towards crystallisation. Branched groups of this type generally do not contain more than one chain branch. Preferred achiral branched groups are isopropyl, isobutyl (=methylpropyl), isopentyl (=3-methylbutyl), isopropoxy, 2-methyl-propoxy and 3-methylbutoxy.

Especially preferred compounds of formula I are selected from the group of compounds of the following formulae,

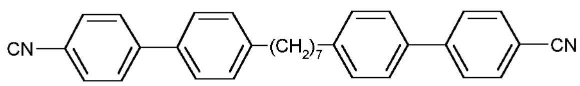

Ia-1b

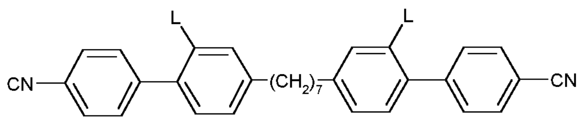

Ia-2b

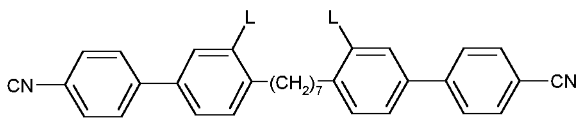

Ia-3b

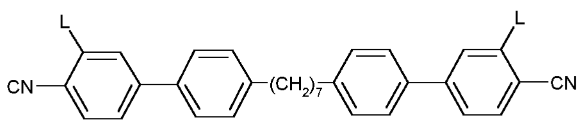

Ia-4b

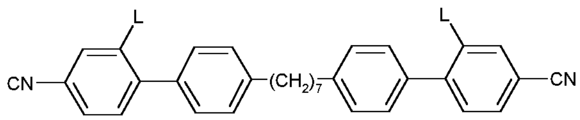

Ia-5b

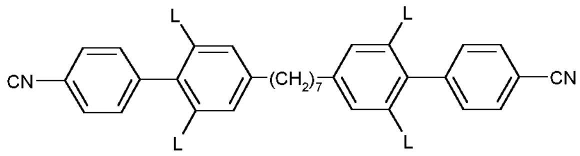

Ia-6b

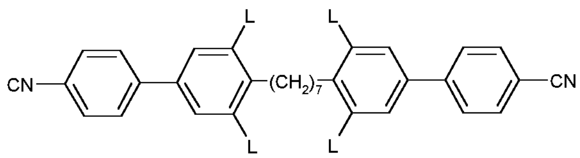

Ia-7b

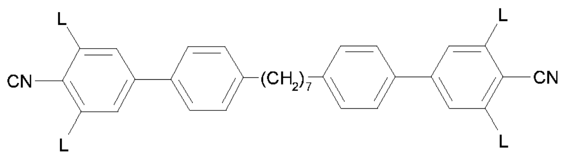

Ia-8b

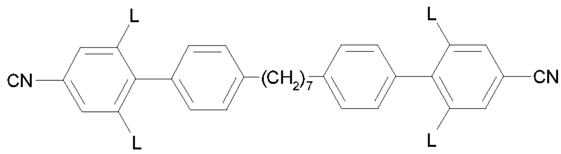

Ia-9b

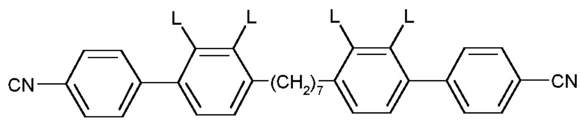

Ia-10b

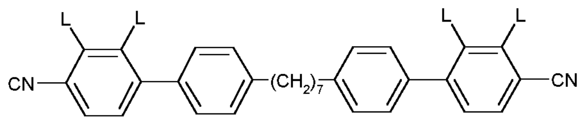

Ia-11b

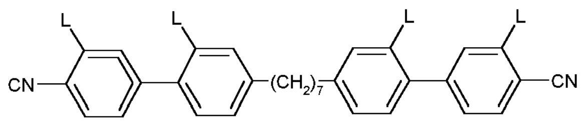

Ia-12b

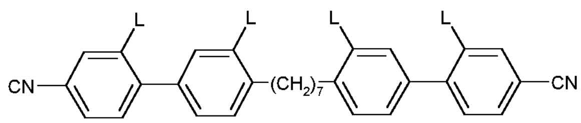

Ia-13b

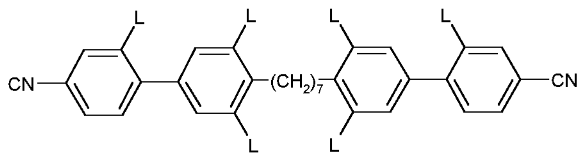

Ia-14b

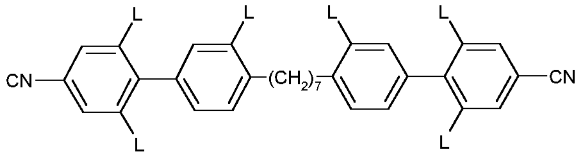

Ia-15b

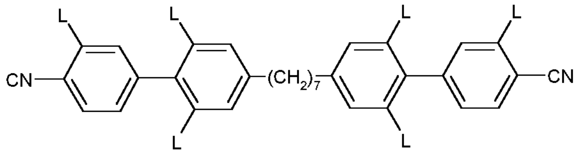

Ia-16b

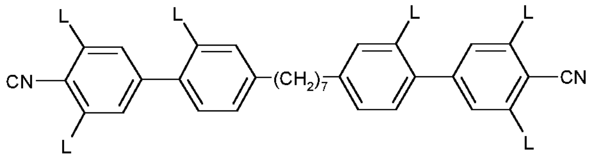

Ia-17b

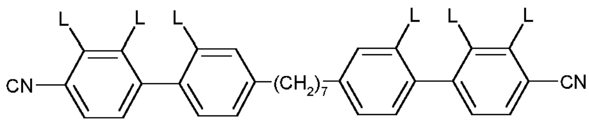

Ia-18b

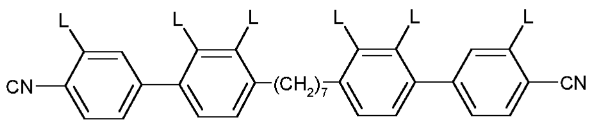

Ia-19b

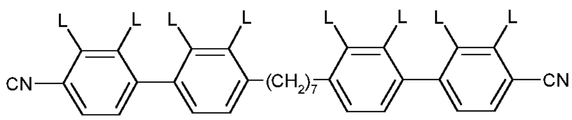

Ia-20b

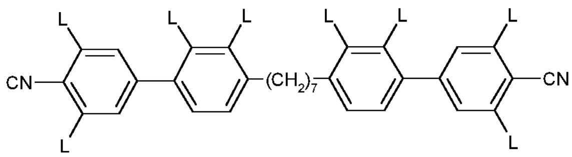

Ia-21b

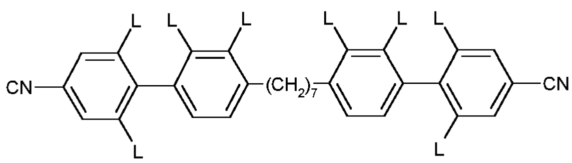

Ia-22b

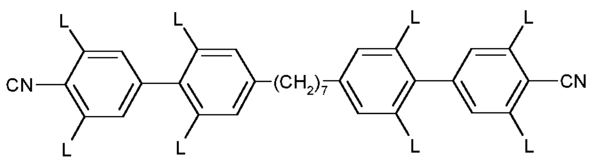

Ia-23b

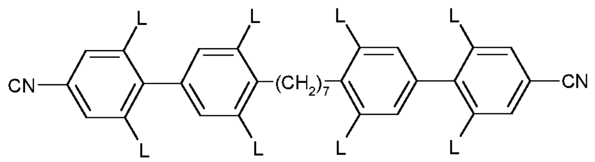

Ia-24b

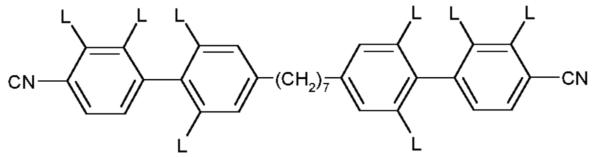

Ia-25b

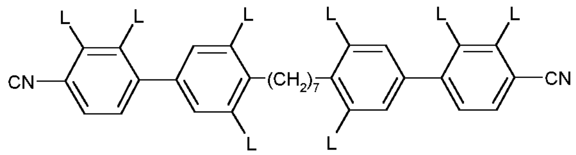

Ia-26b

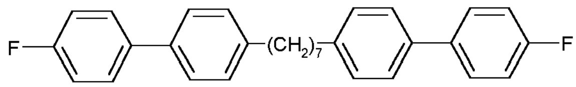

Ia-1c

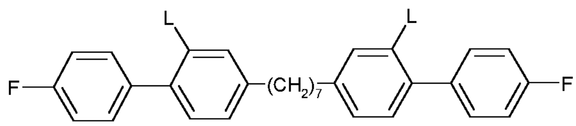

Ia-2c

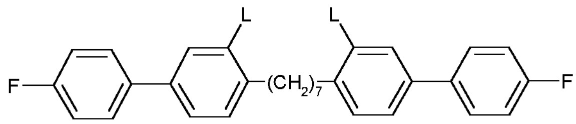

Ia-3c

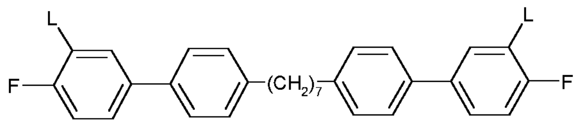

Ia-4c

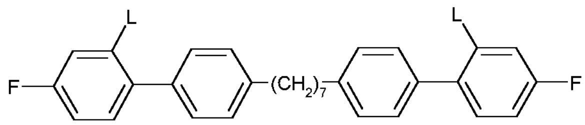

Ia-5c

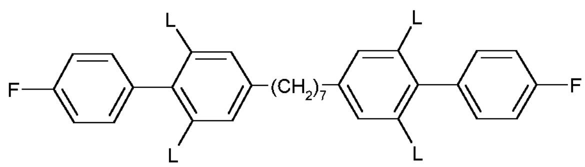

Ia-6c

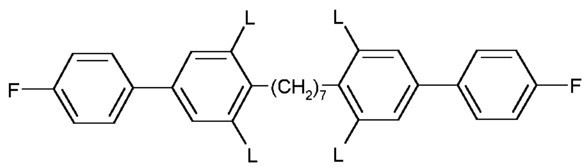

Ia-7c

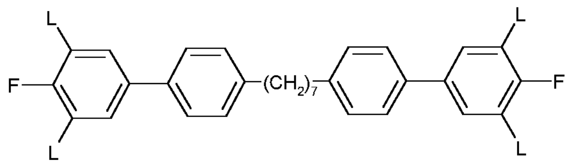
Ia-8c

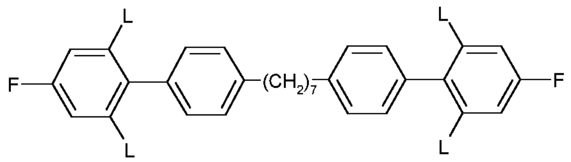
Ia-9c

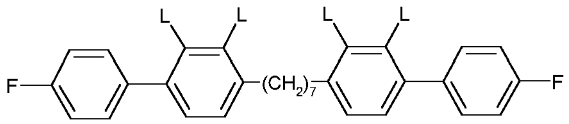
Ia-10c

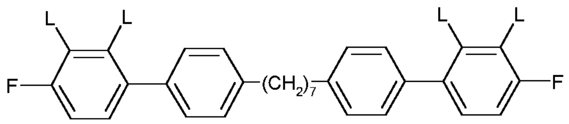
Ia-11c

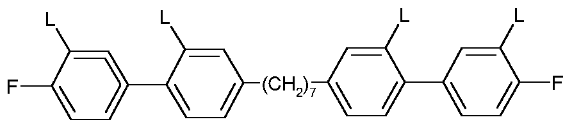
Ia-12c

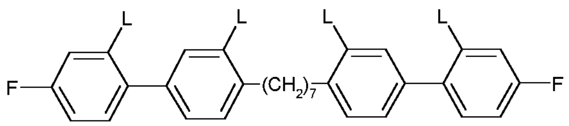
Ia-13c

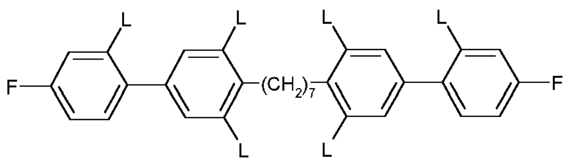
Ia-14c

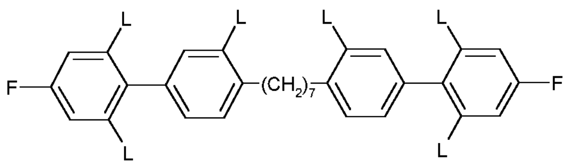
Ia-15c

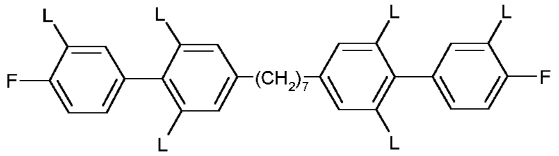
Ia-16c

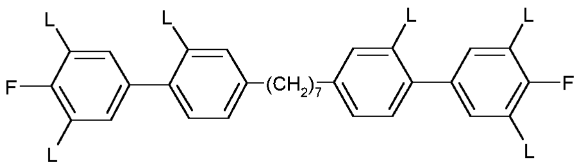

Ia-17c

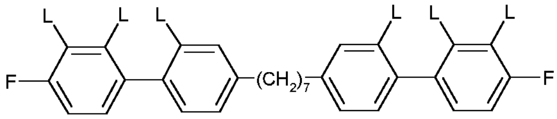

Ia-18c

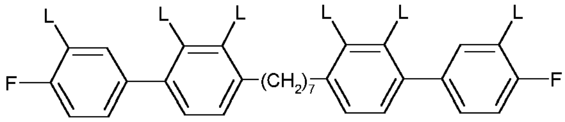

Ia-19c

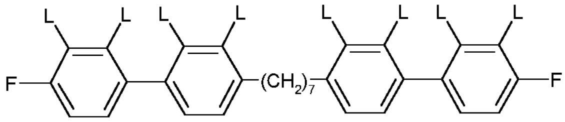

Ia-20c

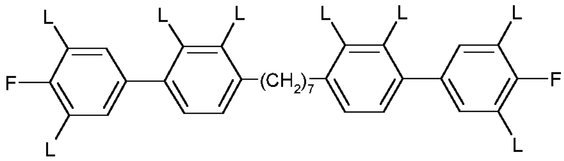

Ia-21c

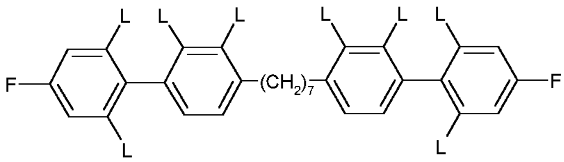

Ia-22c

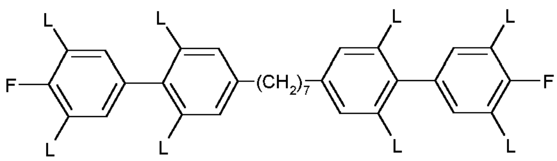

Ia-23c

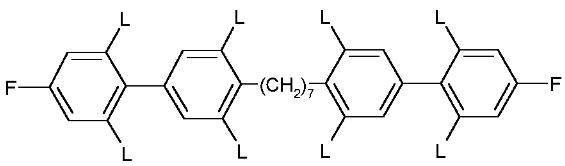

Ia-24c

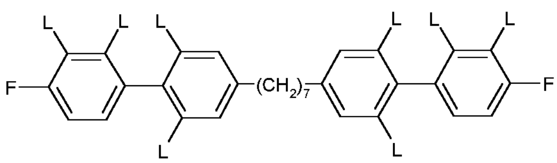

Ia-25c

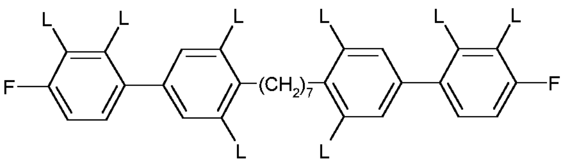

Ia-26c

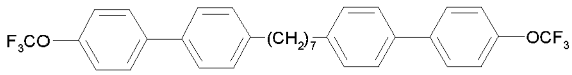

Ia-1d

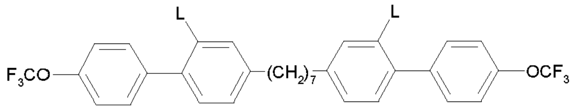

Ia-2d

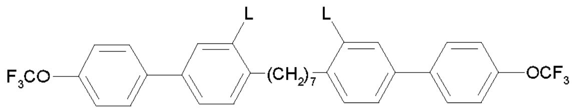

Ia-3d

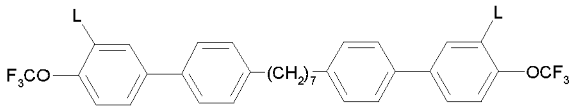

Ia-4d

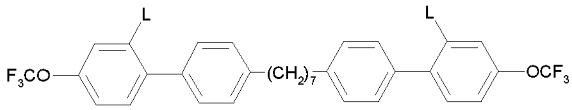

Ia-5d

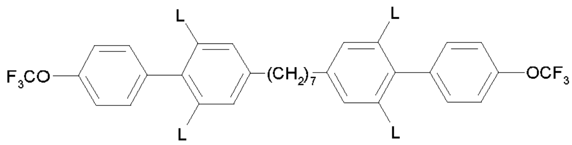

Ia-6d

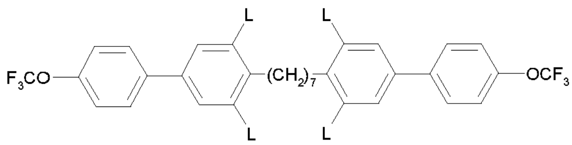

Ia-7d

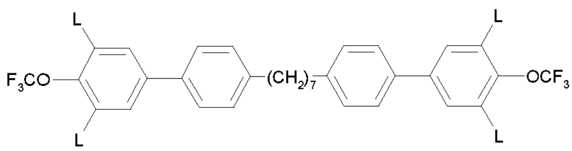

Ia-8d

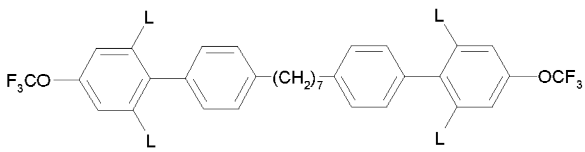

Ia-9d

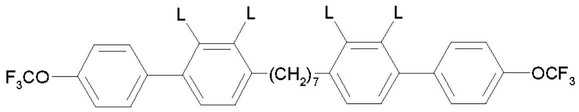

Ia-10d

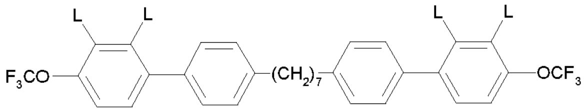

Ia-11d

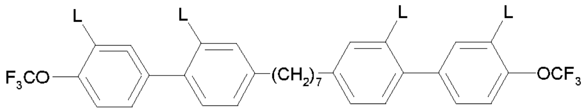

Ia-12d

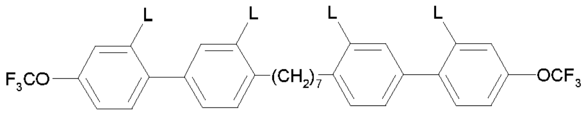

Ia-13d

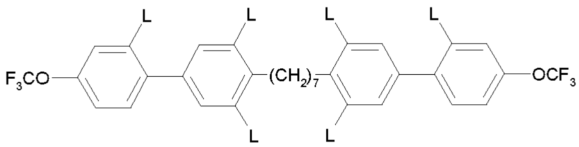

Ia-14d

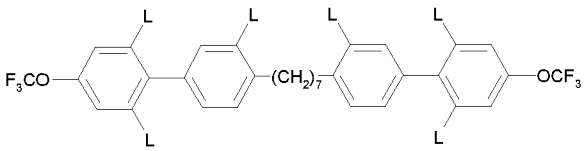

Ia-15d

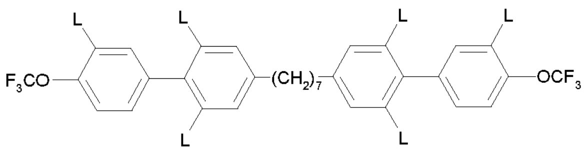

Ia-16d

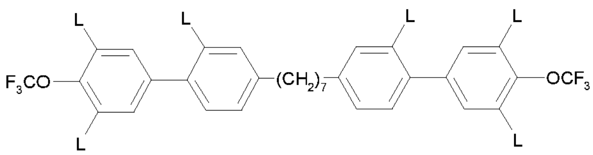

Ia-17d

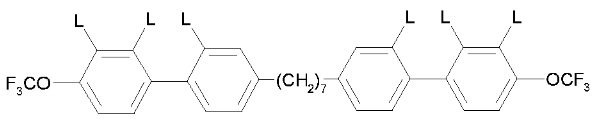

Ia-18d

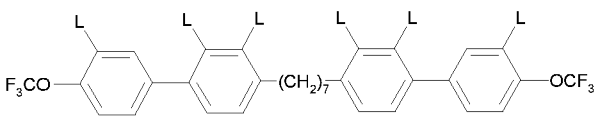

Ia-19d

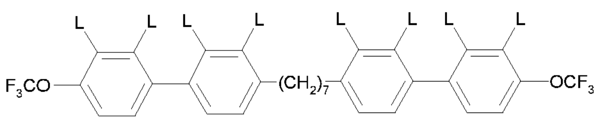

Ia-20d

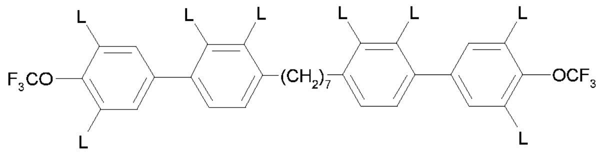

Ia-21d

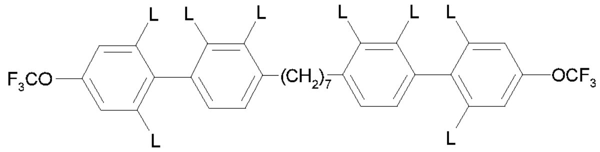

Ia-22d

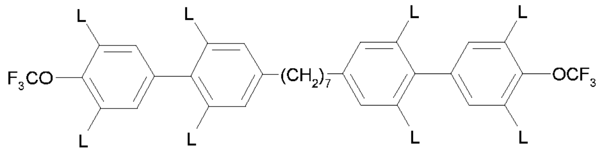

Ia-23d

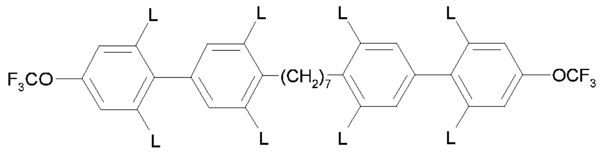

Ia-24d

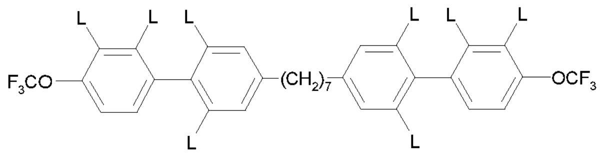

Ia-25d

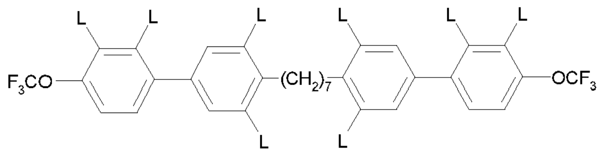

Ia-26d

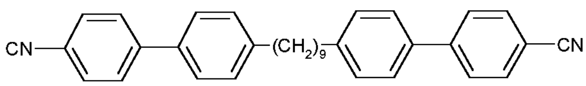

Ia-1f

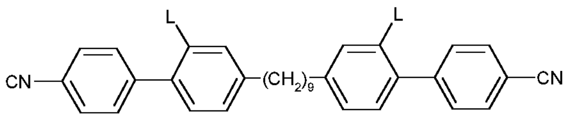

Ia-2f

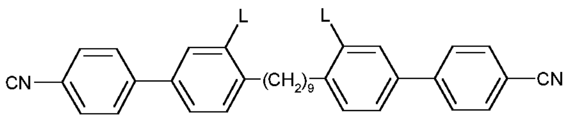

Ia-3f

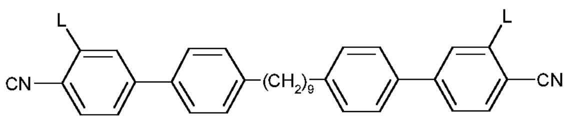

Ia-4f

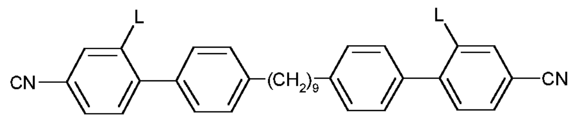

Ia-5f

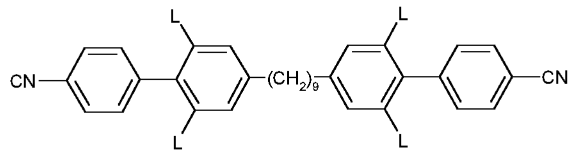

Ia-6f

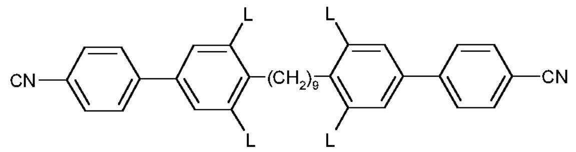

Ia-7f

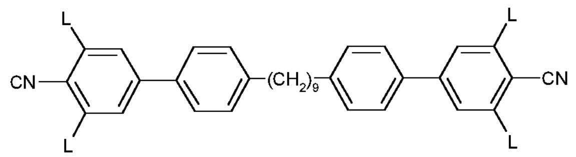

Ia-8f

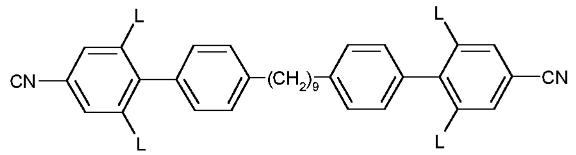

Ia-9f

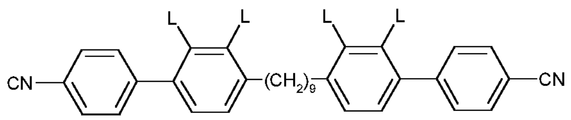

Ia-10f

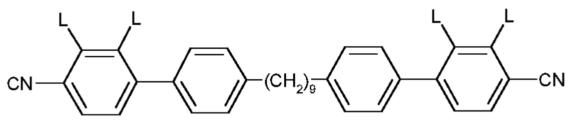

Ia-11f

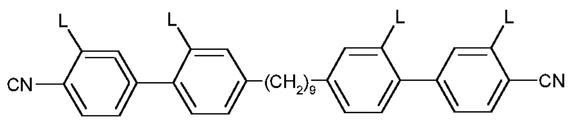

Ia-12f

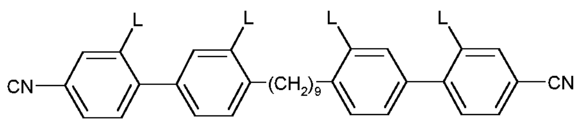

Ia-13f

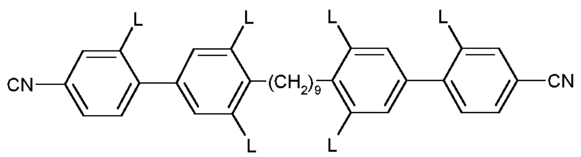

Ia-14f

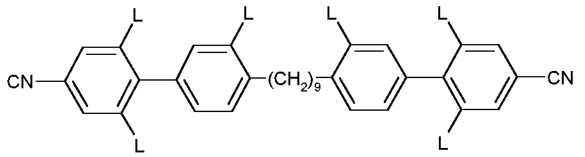

Ia-15f

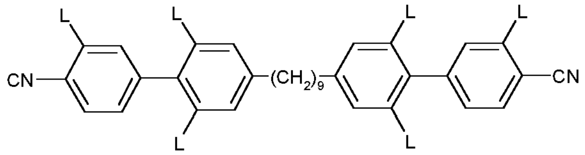

Ia-16f

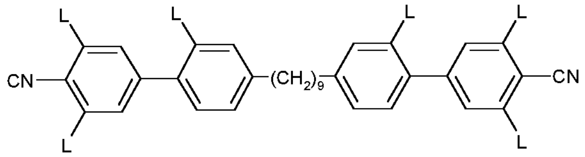

Ia-17f

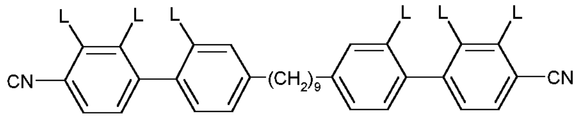

Ia-18f

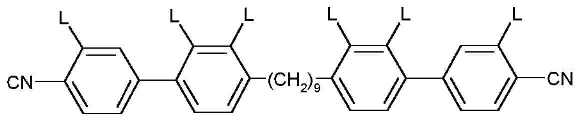

Ia-19f

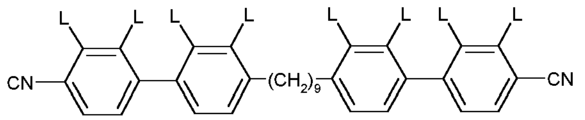

Ia-20f

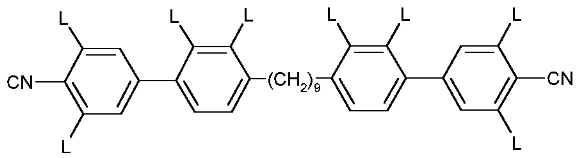

Ia-21f

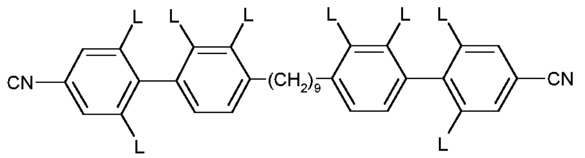

Ia-22f

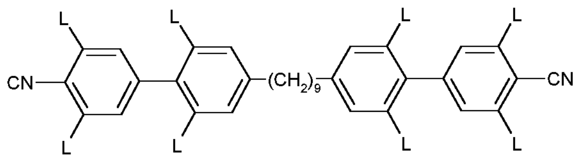

Ia-23f

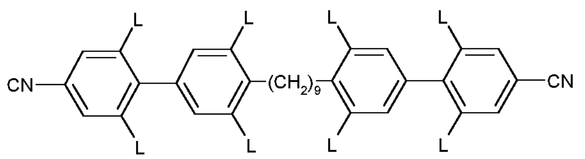

Ia-24f

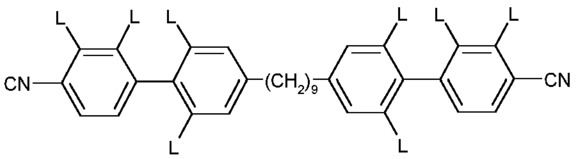

Ia-25f

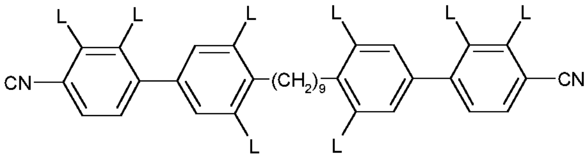

Ia-26f

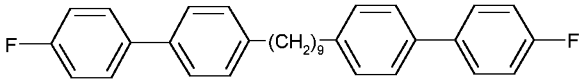

Ia-1g

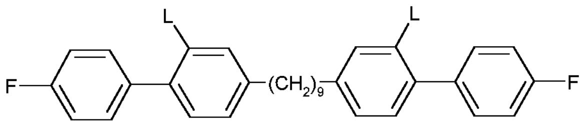

Ia-2g

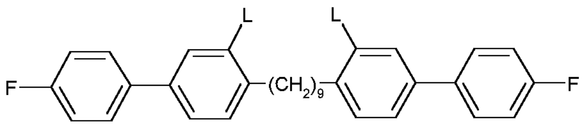

Ia-3g

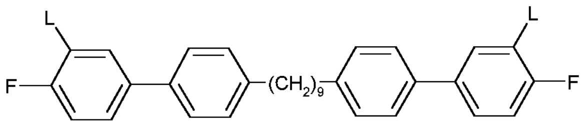

Ia-4g

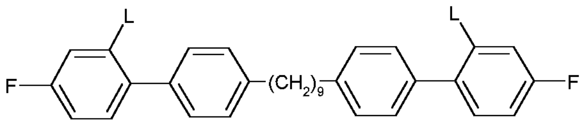

Ia-5g

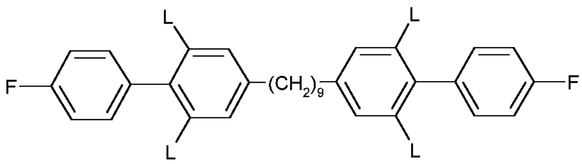

Ia-6g

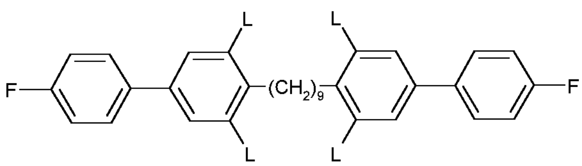

Ia-7g

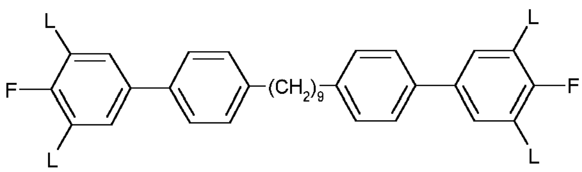

Ia-8g

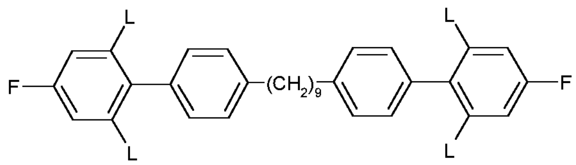

Ia-9g

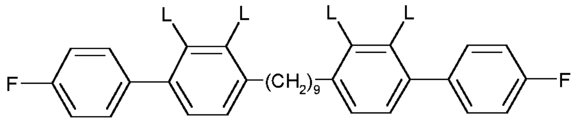

Ia-10g

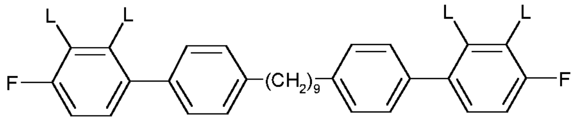

Ia-11g

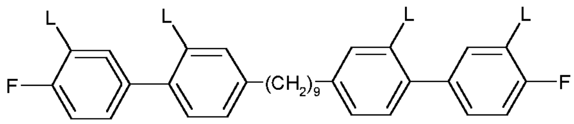

Ia-12g

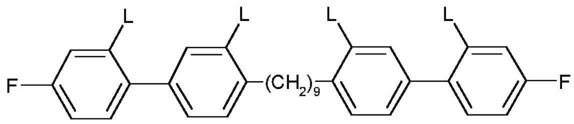

Ia-13g

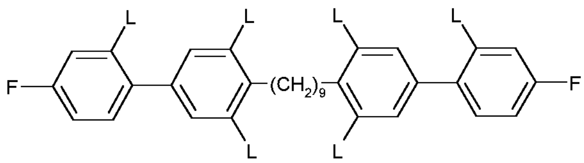

Ia-14g

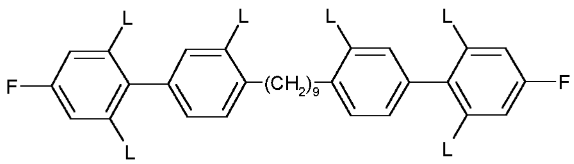

Ia-15g

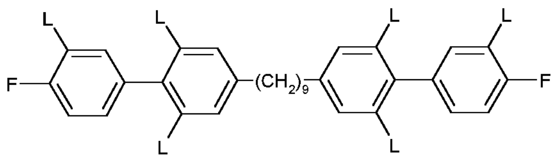

Ia-16g

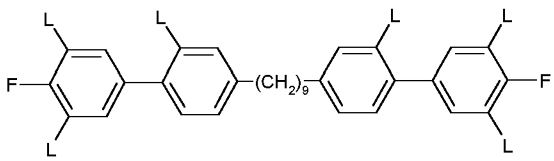

Ia-17g

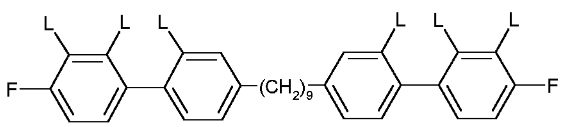

Ia-18g

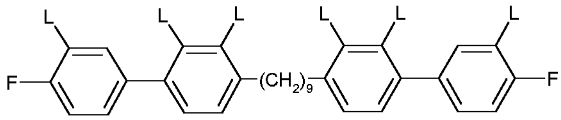

Ia-19g

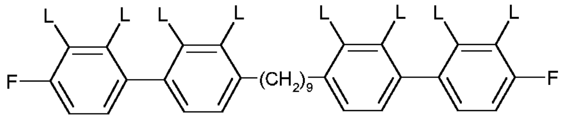

Ia-20g

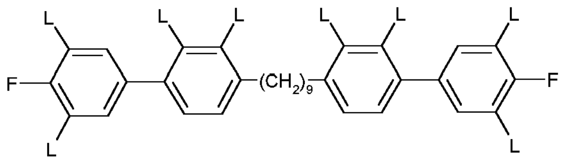

Ia-21g

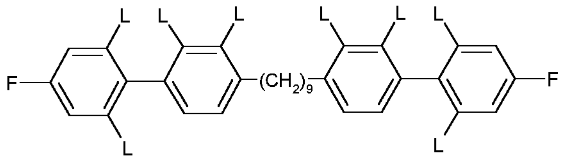

Ia-22g

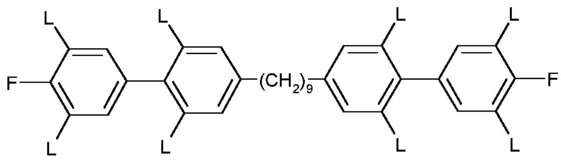

Ia-23g

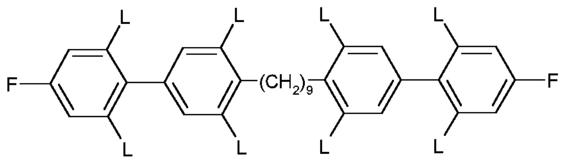

Ia-24g

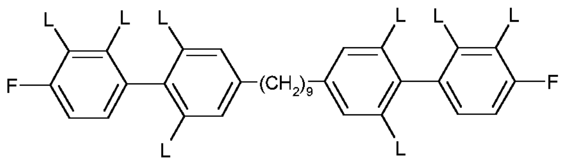

Ia-25g

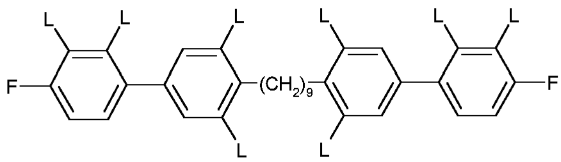

Ia-26g

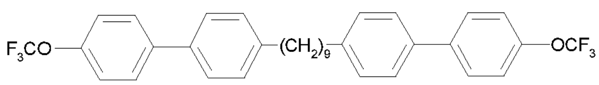

Ia-1h

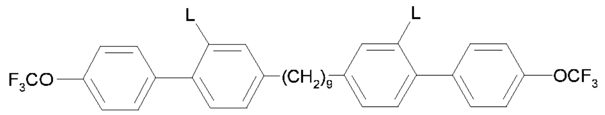

Ia-2h

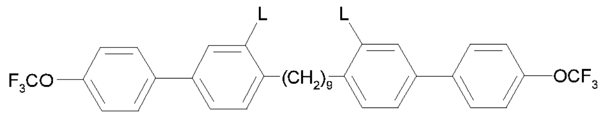

Ia-3h

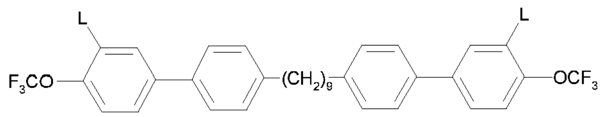

Ia-4h

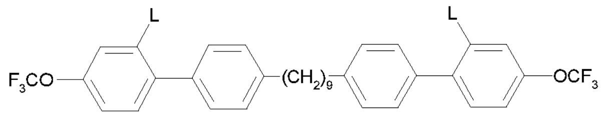

Ia-5h

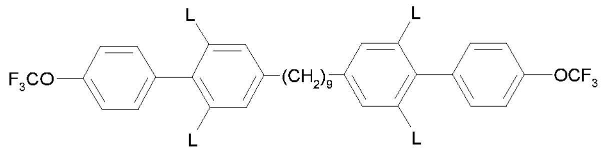

Ia-6h

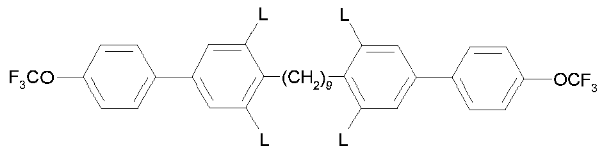

Ia-7h

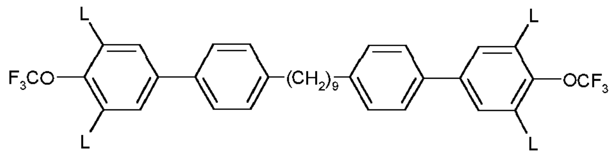

Ia-8h

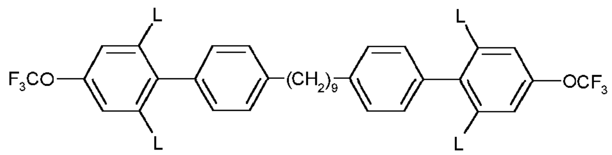

Ia-9h

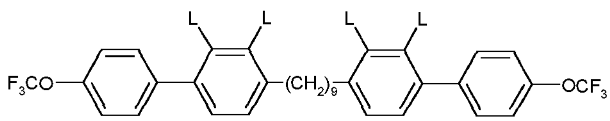

Ia-10h

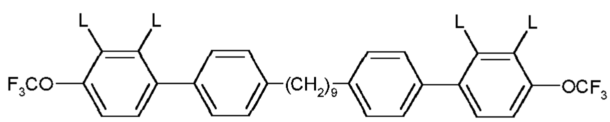

Ia-11h

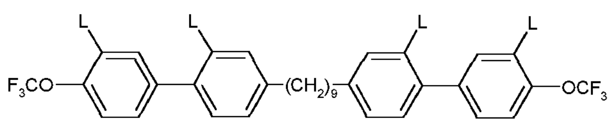

Ia-12h

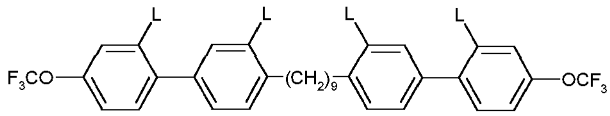

Ia-13h

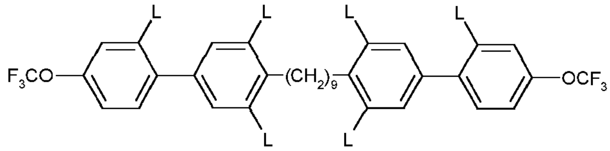

Ia-14h

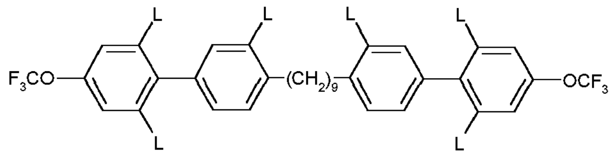

Ia-15h

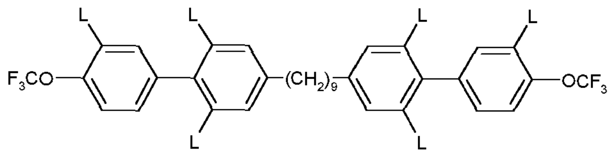

Ia-16h

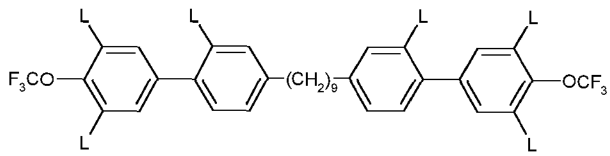

Ia-17h

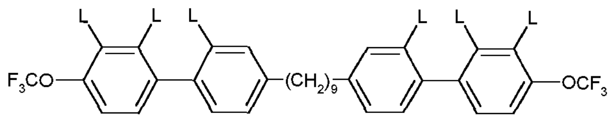

Ia-18h

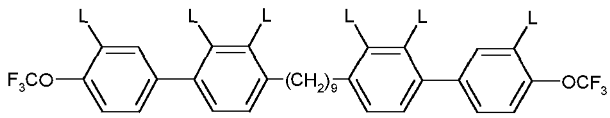

Ia-19h

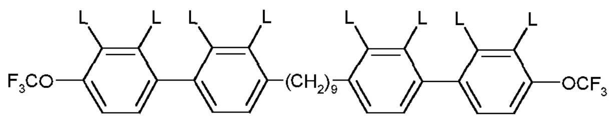

Ia-20h

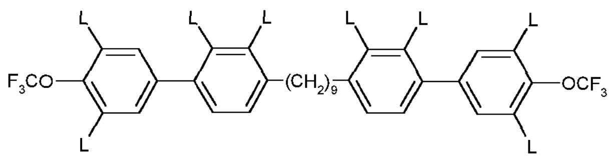

Ia-21h

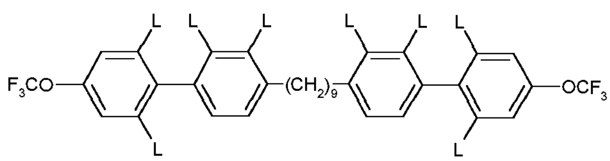

Ia-22h

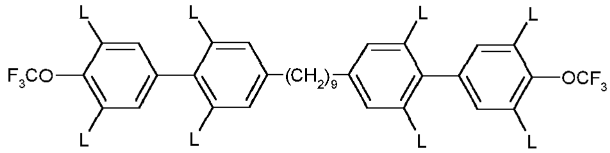

Ia-23h

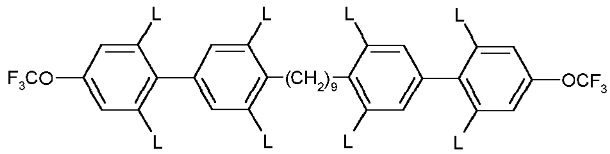

Ia-24h

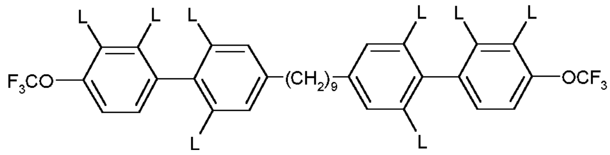

Ia-25h

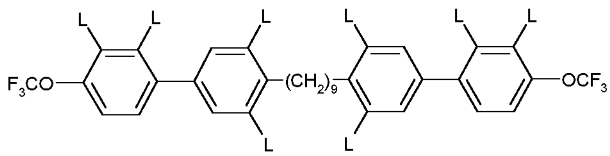

Ia-26h

wherein L is in each occurrence independently of each other preferably F, Cl, CN, OH, NO2 or an optionally fluorinated alkyl, alkoxy or alkanoyl group with 1 to 7 C atoms, very preferably F, Cl, CN, OH, NO2, CH3, C2H5, OCH3, OC2H5, COCH3, COC2H5, COOCH3, COOC2H5, CF3, OCF3, OCHF2, OC2F5, in particular F, Cl, CN, CH3, C2H5, OCH3, COCH3 and OCF3, most preferably F, Cl, CH3, OCH3 and COCH3.

In particular preferred are the compounds of the formulae Ia-1a, Ia-2a, Ia-2b, Ia-17c, Ia-8e, Ia-3f, Ia-5f, Ia-6f, Ia-12f, Ia-23f, wherein L is in each occurrence independently of each other preferably F, Cl, $CH_3$, $OCH_3$ and $COCH_3$.

Most preferred compounds of the formulae I are indicated below:

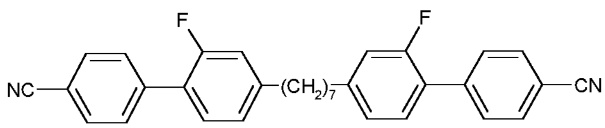

I'a-1

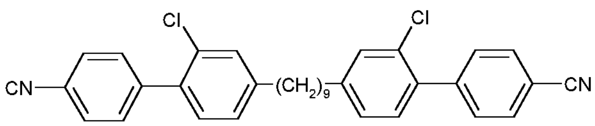

I'a-2

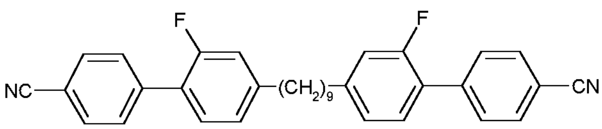

I'a-3

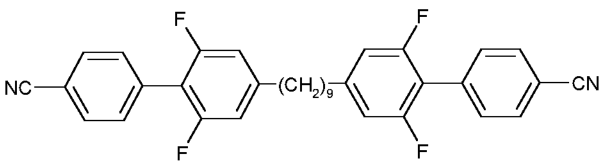

I'a-4

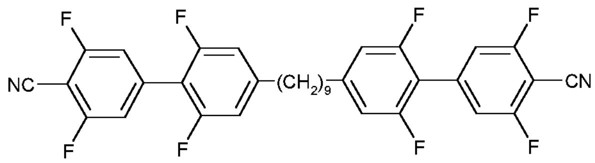

I'a-5

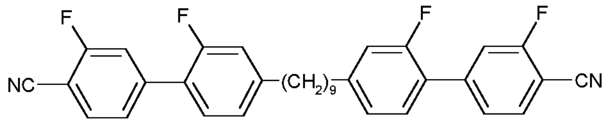

I'a-6

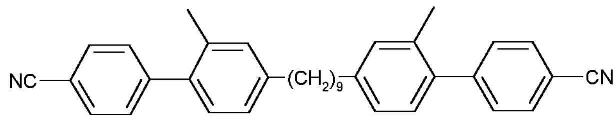

I'a-7

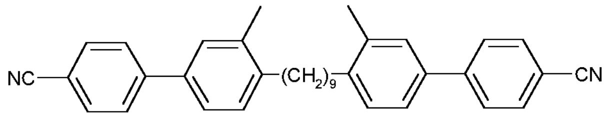

I'a-8

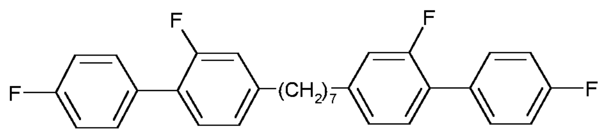

I'a-9

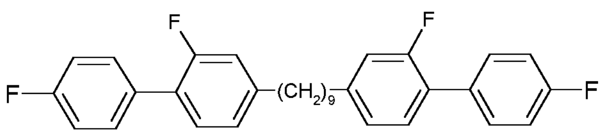

I'a-10

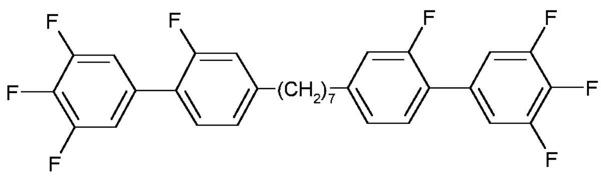

I'a-11

The compounds of formula I can be synthesized according to or in analogy to methods which are known per se and which are described in standard works of organic chemistry such as, for example, Houben-Weyl, Methoden der organischen Chemie, Thieme-Verlag, Stuttgart. A preferred method of preparation can be taken from WO 2013/004333 A1.

As commonly known, for example, from WO 2013/004333 A1 or WO 2013/174481 A1, the alkyl linked bimesogenic compounds of formula I are capable to induce $N_{TB}$ phases. However, one drawback of this type of compounds is that they often crystallize very easily while utilized in higher concentrations.

Preferred compounds of formula II are selected from compounds in which u denotes 0 and the group ($-A^{21}-A^{22}-$) is selected from the groups MG-1 to MG-8 as given above.

Further preferred compounds of formula II are selected from compounds in which u denotes 1 and the groups ($-A^{24}-A^{25}-A^{26}-$) and ($-A^{21}-A^{22}-A^{23}-$) are each and independently selected from the following groups

| | |
|---|---|
| -Cyc-Cyc-Cyc- | MG-9 |
| -Phe-Phe-Cyc- | MG-10 |
| -Phe-Cyc-Phe- | MG-11 |
| -Cyc-Phe-Cyc- | MG-12 |

(continued)

| | |
|---|---|
| -Phe-Cyc-Cyc- | MG-13 |
| -Phe-Phe-Phe- | MG-14 |
| -Phe-Phe-PheL- | MG-15 |
| -Phe-PheL-Phe- | MG-16 |
| -PheL-Phe-Phe- | MG-17 |
| -PheL-Phe-PheL- | MG-18 |
| -PheL-PheL-Phe- | MG-19 |
| -PheL-PheL-PheL- | MG-20 |
| -Phe-PheL-Cyc- | MG-21 |
| -Phe-Cyc-PheL- | MG-22 |
| -Cyc-Phe-PheL- | MG-23 |
| -PheL-Cyc-PheL- | MG-24 |
| -PheL-PheL-Cyc- | MG-25 |
| -PheL-Cyc-Cyc- | MG-26 |
| -Cyc-PheL-Cyc- | MG-27 |

wherein
Cyc, Phe, PheL an L have one of the meanings given above for the groups MG-1 to MG-8.

Further preferred compounds of formula II are selected from compounds in which u denotes 0 and the group (-$A^{21}$-$A^{22}$-) is selected from the groups MG-1 to MG-8 as given above, and in which the group (-$A^{24}$-$A^{25}$-$A^{26}$-) is selected from the groups MG-9 to MG-27.

Especially preferred compounds of formula II are selected from the group of compounds of the following formulae,

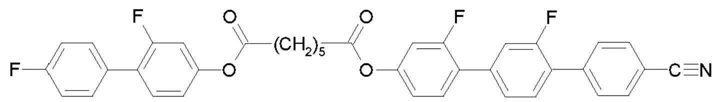

IIa-1

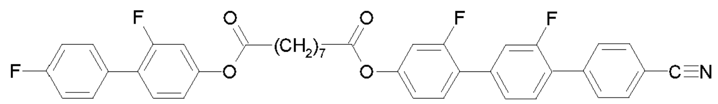

IIa-2

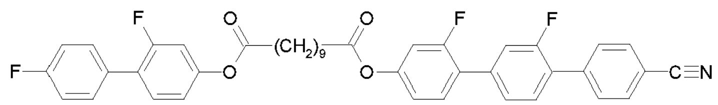

IIa-3

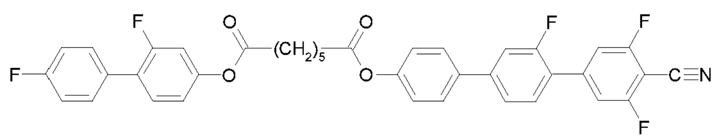

IIb-1

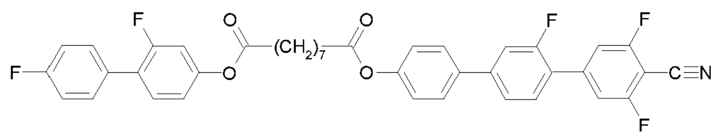

IIb-2

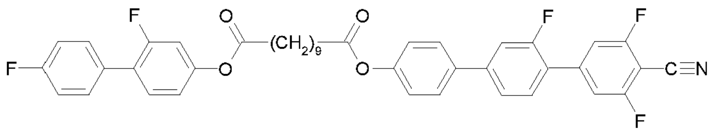

IIb-3

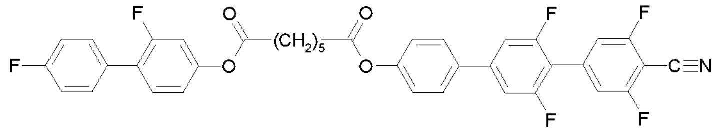

IIc-1

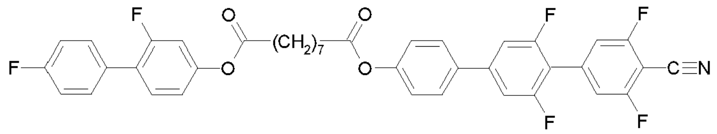

IIc-2

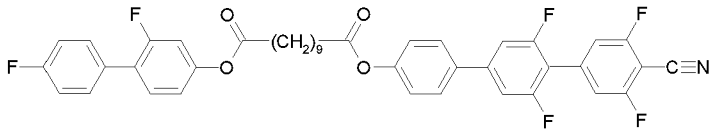

IIc-3

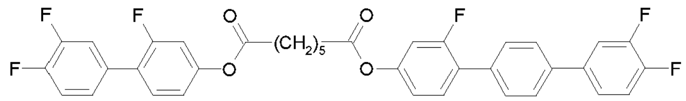

IId-1

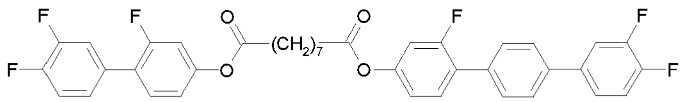

IId-2

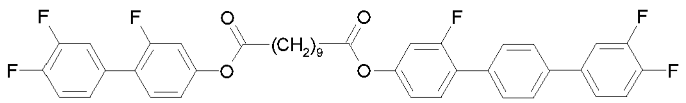

IId-3

The compounds of formula II can be synthesized according to or in analogy to methods which are known per se and which are described in standard works of organic chemistry such as, for example, Houben-Weyl, Methoden der organischen Chemie, Thieme-Verlag, Stuttgart.

The unique properties of the media in accordance with the present invention as described above and below, are achieved by using especially a combination of compounds of formula I and II. Both compounds are characterized by high stabilities, suitable clearing points.

This media according to the present invention use a particular ratio of compounds of formula I and of compounds of formula II in order to give resultant media that is both stable against crystallization and exhibiting a room temperature $N_{TB}$ phase. In particular, the media of the present invention utilizes a ratio of compounds of formulae I and II in the range from 3:1, preferably 2:1, more preferably 1.5:1, and in particular 1.25:1, especially 1:1, or even 0.75:1.

In further preferred embodiment, the LC medium in accordance with the present invention additionally comprises one, two, three or more compounds of formula III,

$$R^{31}\text{-}A^{31}\text{-}A^{32}\text{-}Z^{31}\text{-}(CH_2)_z\text{-}Z^{32}\text{-}A^{33}\text{-}A^{34}\text{-}R^{32} \qquad \text{III}$$

wherein

$R^{31}$ and $R^{32}$ have each and independently one of the meanings as given above for $R^{11}$ under formula I,

$A^{31}$ to $A^{34}$ have each and independently one of the meanings as given above for under formula I,

$Z^{31}$ and $Z^{32}$ are each independently in each occurrence, -COO-, -OCO-, -O-CO-O-, $-OCH_2-$, $-CH_2O-$, $-OCF_2-$, $-CF_2O-$, $-CH_2CH_2-$, $-(CH_2)_4-$, $-CF_2CF_2-$, -CH=CH-, -CF=CF-, -CH=CH-COO-, -OCO-CH=CH- or -C≡C-, optionally substituted with one or more of F, S and/or Si, preferably -COO-, -OCO-, or -O-CO-O-, more preferably -COO-, or -OCO-.

z denotes an integer from 1 to 15, preferably an odd (i.e. uneven) integer and, more preferably 3, 5, 7 or 9.

Preferred compounds of formula III are selected from compounds in which the groups ($-A^{31}-A^{32}-$) and ($-A^{33}-A^{34}-$) are each and independently selected from the groups of MG-1 to MG-8 as given above.

Especially preferred compounds of formula III are selected from the group of compounds of the following formulae:

- symmetrical ones (IIIa and IIIb):

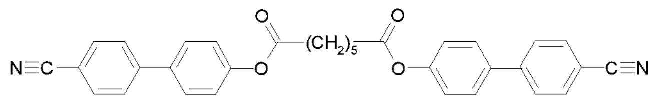

IIIa-1

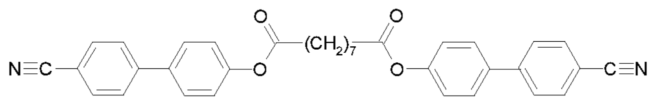

IIIa-2

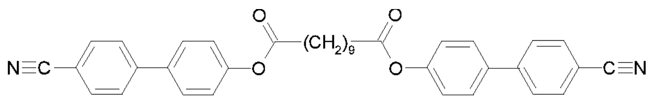

IIIa-3

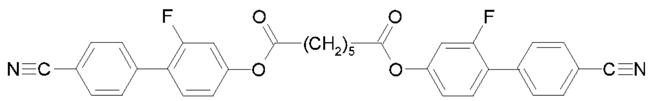

IIIa-4

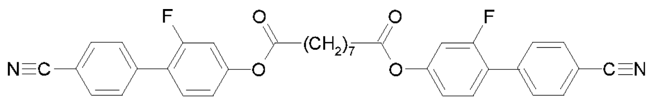

IIIa-5

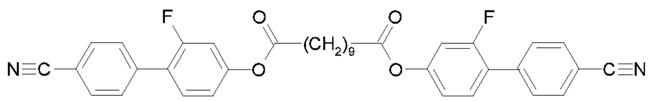

IIIa-6

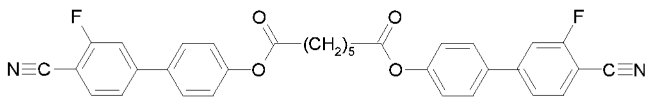

IIIa-7

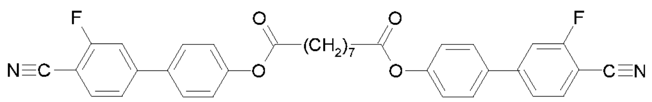

IIIa-8

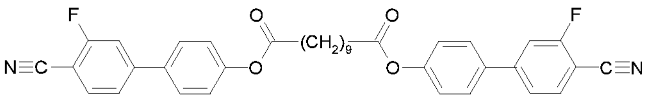

IIIa-9

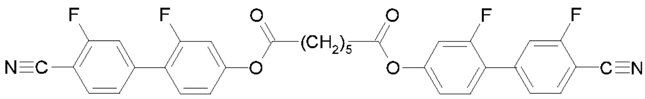

IIIa-10

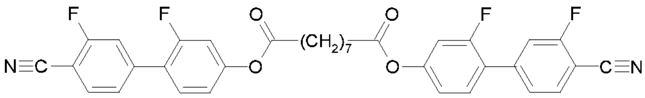

IIIa-11

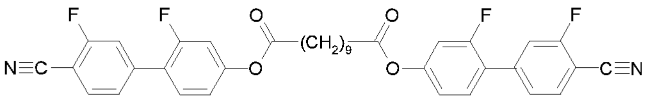

IIIa-12

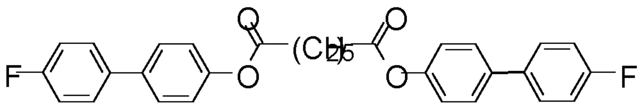

IIIb-1

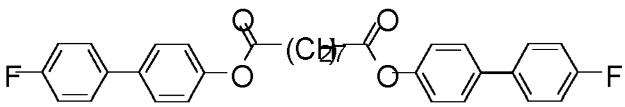

IIIb-2

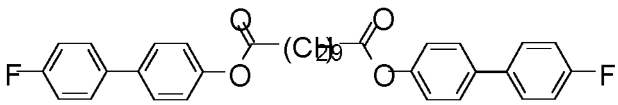

IIIb-3

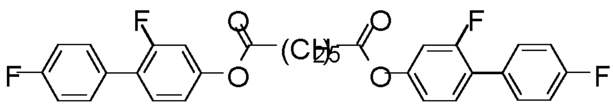

IIIb-4

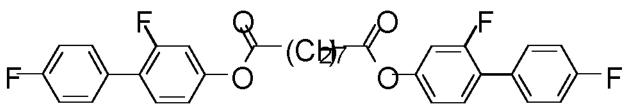

IIIb-5

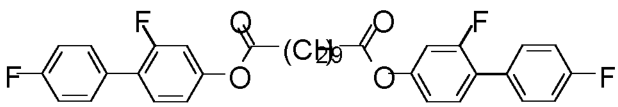

IIIb-6

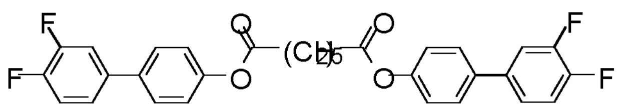

IIIb-7

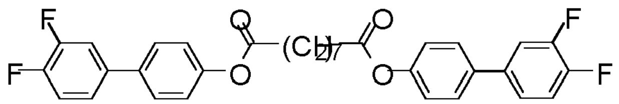

IIIb-8

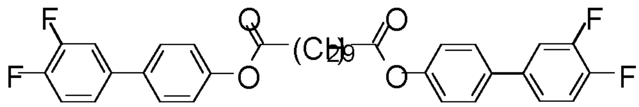

IIIb-9

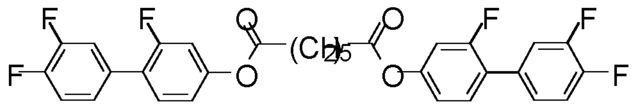

IIIb-10

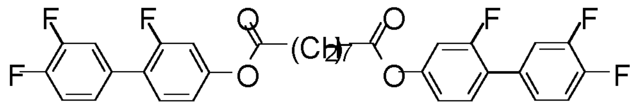

IIIb-11

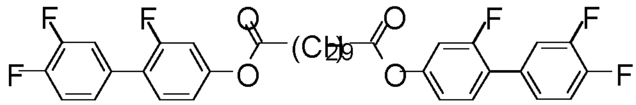

IIIb-12

- non-symmetrical ones IIIc:

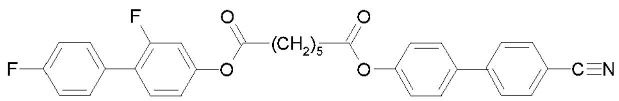

IIIc-1

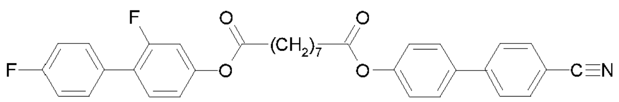

IIIc-2

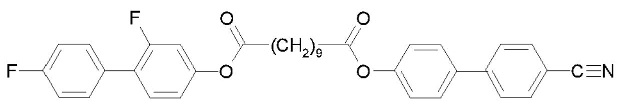

IIIc-3

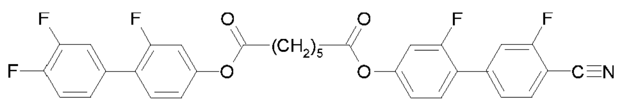

IIIc-4

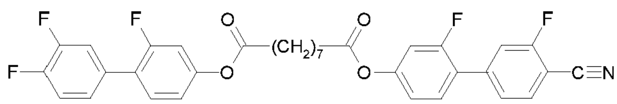

IIIc-5

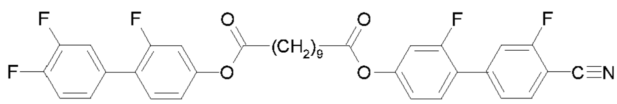

IIIc-6

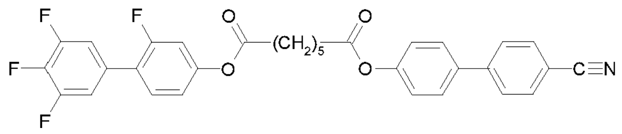

IIIc-7

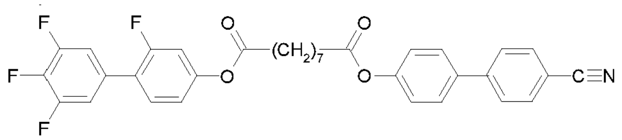

IIIc-8

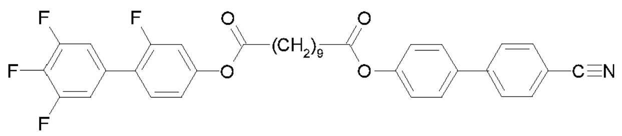

IIIc-9

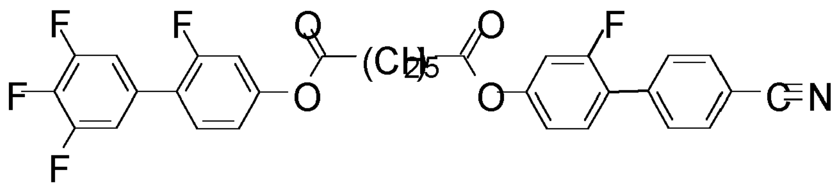

IIIc-10

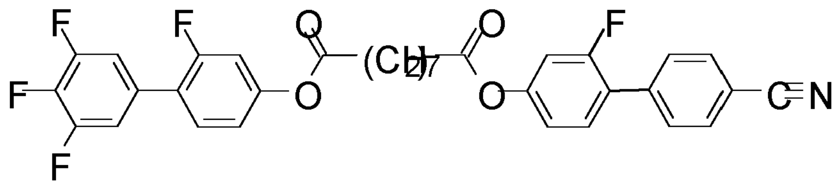

IIIc-11

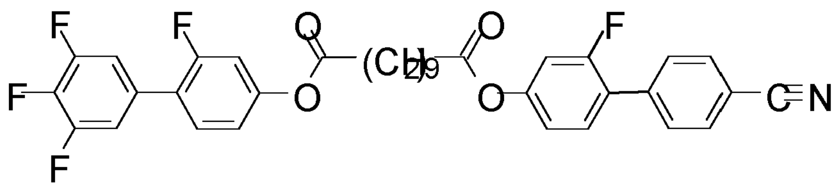

IIIc-12

The compounds of formula III can be synthesized according to or in analogy to methods which are known per se and which are described in standard works of organic chemistry such as, for example, Houben-Weyl, Methoden der organischen Chemie, Thieme-Verlag, Stuttgart.

In a further preferred embodiment, the LC medium in accordance with the present invention additionally comprises one or more compounds of formula IV,

$$R^{41}\text{-}A^{41}\text{-}A^{42}\text{-}Z^{41}\text{-}(CH_2)_w\text{-}A^{43}\text{-}A^{44}\text{-}R^{42} \qquad \text{IV}$$

wherein

| | |
|---|---|
| $R^{41}$ and $R^{42}$ | have each and independently one of the meanings as given above for $R^{11}$ under formula I, |
| $A^{31}$ to $A^{34}$ | have each and independently one of the meanings as given above for under formula I, |
| $Z^{41}$ | denotes -O-, -COO-, -OCO-, -O-CO-O-, $-OCH_2-$, $-CH_2O$, $-CH_2CH_2-$, $-(CH_2)_4-$, $-CF_2CF_2-$, -CH=CH-, -CF=CF-, -CH=CH-COO-, -OCO-CH=CH- or -C≡C-, optionally substituted with one or more of F, S and/or Si, preferably -O-, -COO-, -OCO-, or -O-CO-O-, more preferably -O-, -COO-, or -OCO-, and |
| w | denotes an integer from 1 to 15, preferably an odd (i.e. uneven) integer and, more preferably 3, 5, 7 or 9. |

Preferred compounds of formula IV are selected from compounds in which the groups ($-A^{41}-A^{42}-$) and ($-A^{43}-A^{44}-$) are each and independently selected from the groups of MG-1 to MG-8 as given above.

Further preferred are compounds of formula IV wherein the groups ($-A^{41}-A^{42}-$) and ($-A^{43}-A^{44}-$) in formula IV are not identical or not mirror images.

Especially preferred compounds of formula IV are selected from the group of compounds of the following formulae,

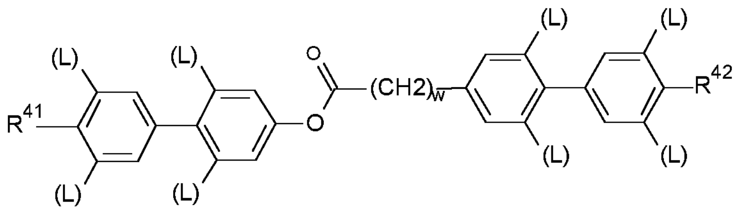

IV-A

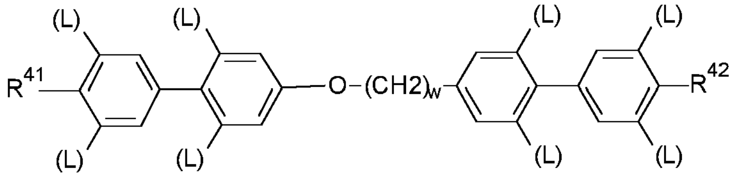

IV-B

wherein $R^{41}$ and $R^{42}$ are independently from each other as defined above, including the preferred meanings of these groups, preferably $R^{41}$ is F or CN, preferably $R^{42}$ is $OCF_3$, $CF_3$, F or CN, more preferably F or CN and most preferably CN and wherein L is in each occurrence independently of each other F, Cl or preferably F or Cl, most preferably F, and w denotes preferably 5, 7, or 9.

Further preferred are compounds of formula IV wherein the groups ($-A^{41}-A^{42}-$) and ($-A^{43}-A^{44}-$) in formula IV are not identical or not mirror images.

In particular preferred compounds of formula IV are selected from the group of compounds of the following formulae,

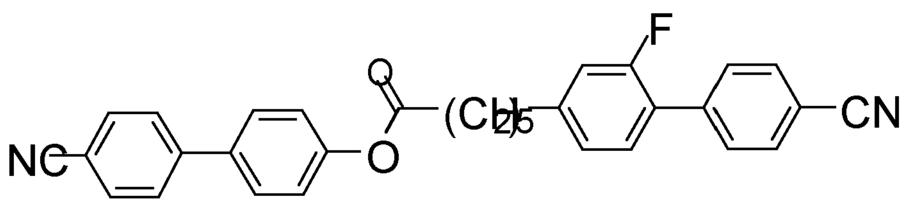

IV-1

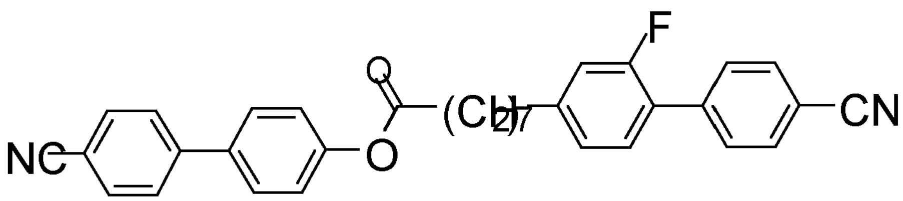

IV-2

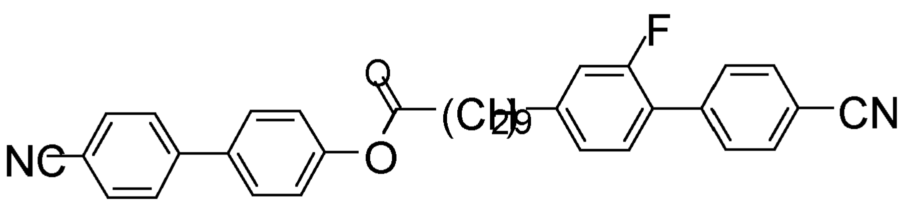

IV-3

The compounds of formula IV can be synthesized according to or in analogy to methods which are known per se and which are described in standard works of organic chemistry such as, for example, Houben-Weyl, Methoden der organischen Chemie, Thieme-Verlag, Stuttgart. Preferably, the compounds of formula IV are synthesized according to

or in analogy to methods which are disclosed for example in WO 2014/005672 A1.

In a further preferred embodiment, the LC medium in accordance with the present invention additionally comprises one, two, three or more compounds of formula V,

$$R^{51}\text{-}A^{51}\text{-}Z^{51}\text{-}A^{52}\text{-}(Z^{52}\text{-}A^{53})_l\text{-}(CH_2)_p\text{-}(A^{54}\text{-}Z^{53}\text{-})_m A^{55}\text{-}Z^{54}\text{-}A^{56}\text{-}R^{52} \qquad V$$

wherein

$R^{51}$ and $R^{52}$ have each and independently one of the meanings as given above for $R^{11}$ under formula I,

$A^{51}$ to $A^{56}$ have each and independently one of the meanings as given above for under formula I,

$Z^{51}$ to $Z^{54}$ each and independently denotes -COO-, -OCO-, -O-CO-O-, $-OCH_2-$, $-CH_2O-$, $-CH_2CH_2-$, $-(CH_2)_4-$, $-OCF_2-$, $-CF_2O-$, $-CF_2CF_2-$, -CH=CH-, -CF=CF-, -CH=CH-COO-, -OCO-CH=CH- or -C≡C-, optionally substituted with one or more of F, S and/or Si, or a single bond, preferably -COO-, -OCO-, -O-CO-O-, or a single bond more preferably -COO-, or -OCO-, or a single bond with the proviso that at least one of $Z^{51}$ to $Z^{54}$ is not a single bond,

p denotes an integer from 1 to 15, preferably an odd (i.e. uneven) integer and, more preferably 3, 5, 7 or 9, and

l and m each and independently denotes 0 or 1, preferably both 0.

Preferred compounds of formula IV are selected from compounds in which at least one of the groups $(-A^{51}\text{-}Z^{51}\text{-}A^{52}\text{-}(Z^{52}\text{-}A^{53})_l\text{-}$, $-(A^{54}\text{-}Z^{53}\text{-})_m A^{55}\text{-}Z^{54}\text{-}A^{56}\text{-})$ are is selected from the groups of MGa to MGn (the two reference Nos. "MG i" and "MG I" being deliberately omitted to avoid any confusion) and their mirror images

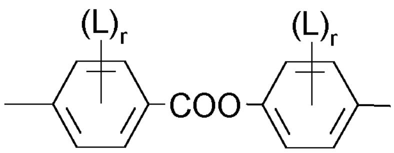

MGa

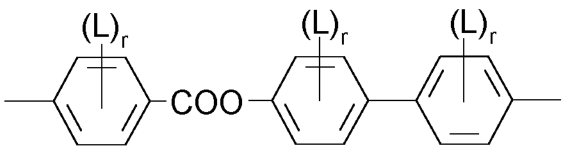

MGb

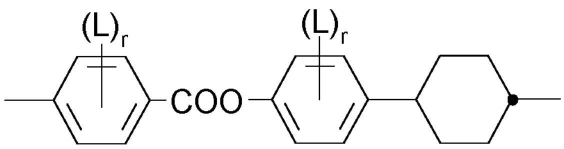

MGc

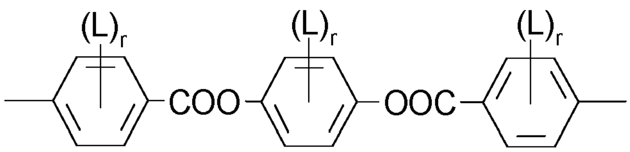

MGd

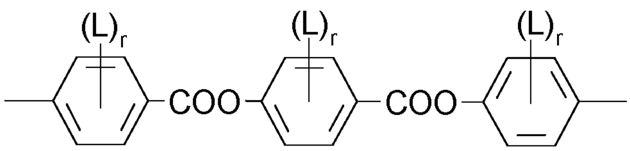

MGe

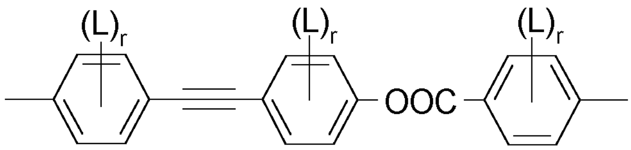
MGf

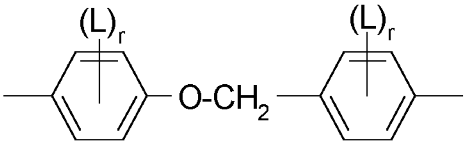
MGg

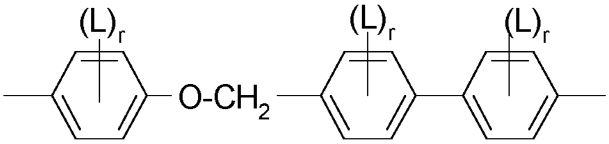
MGh

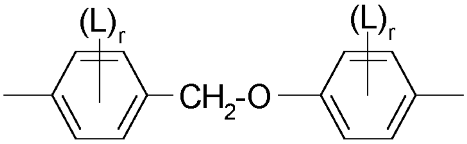
MGj

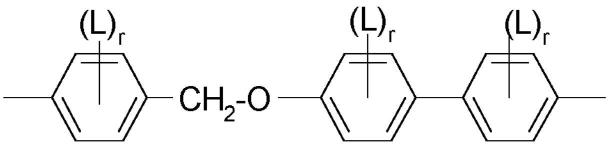
MGk

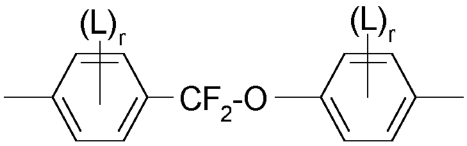
MGm

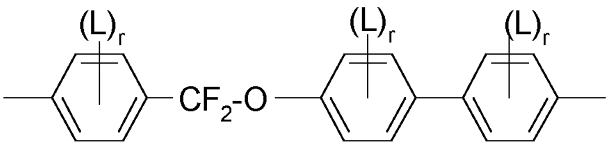
MGn

wherein

wherein L is in each occurrence independently of each other preferably F, Cl, CN, or an optionally fluorinated alkyl, alkoxy or alkanoyl group with 1 to 7 C atoms, very preferably F, Cl, CN, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$, in particular F, Cl, CN, $CH_3$, $C_2H_5$, $OCH_3$, $COCH_3$ and $OCF_3$, most preferably F, Cl, $CH_3$, $OCH_3$ and $COCH_3$ and r is in each occurrence independently of each other 0, 1, 2, 3 or 4, preferably 0,1 or 2.

The group

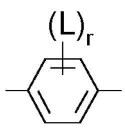

in these preferred formulae is very preferably denoting

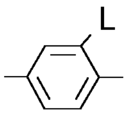, 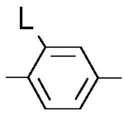 or 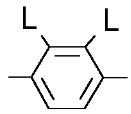,

furthermore

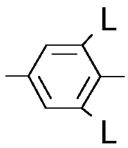,

or

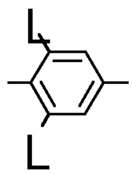

wherein L is preferably F, Cl, $CH_3$, $OCH_3$ and $COCH_3$

Preferred compounds of formula V are selected from the group of compounds of formulae VA to VD

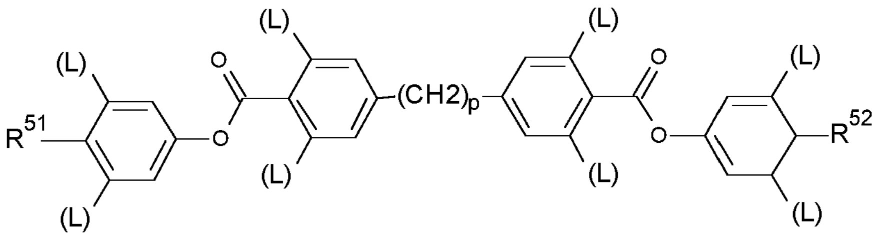

VA

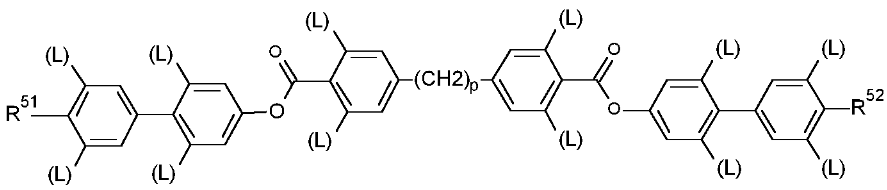

VB

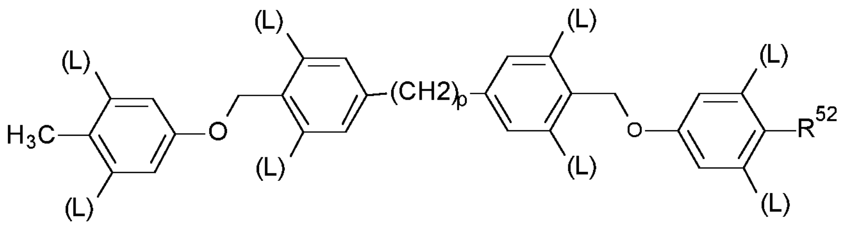

VC

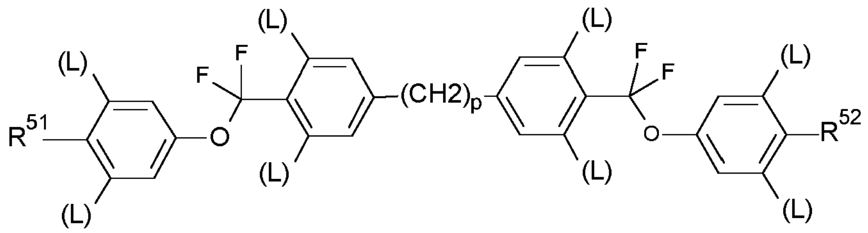

VD

wherein $R^{51}$ and $R^{52}$ are independently from each other as defined above, including the preferred meanings of these groups, L is in each occurrence independently of each other F, Cl or preferably F or Cl, most preferably F, and p denotes 5, 7, or 9.

Further preferred are compounds of formula V wherein the groups $(-A^{51}-Z^{51}-A^{52}-(Z^{52}-A^{53})_l-$ and $-(A^{54}-Z^{53}-)_mA^{55}-Z^{54}-A^{56}-)$ in formula V are identical or mirror images with the proviso that at least one of $Z^{51}$ to $Z^{54}$ is not a single bond.

Further preferred are compounds of formula V, wherein l and m denotes 0 or 1, more preferably l an m both denote 0.

Especially preferred compounds of formula V are selected from the group of compounds of the following formulae,

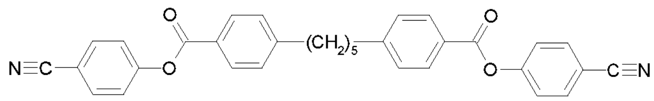

V-1

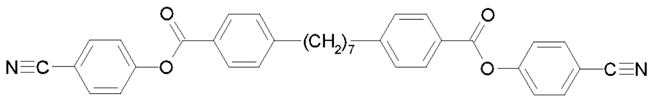

V-2

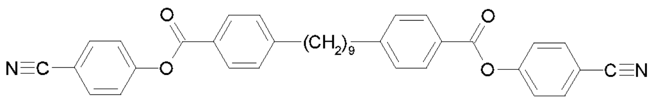

V-3

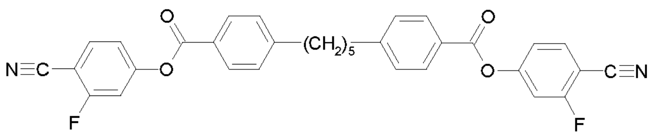

V-4

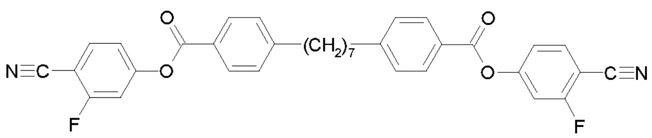

V-5

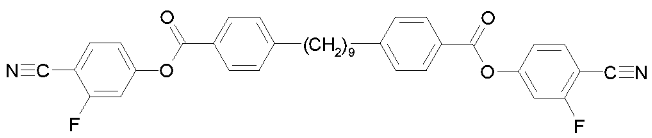

V-6

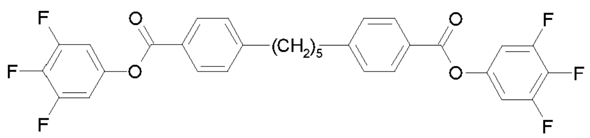

V-7

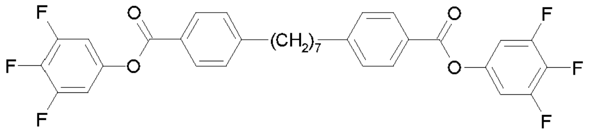

V-8

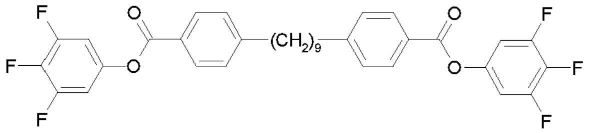

V-9

The compounds of formula V can be synthesized according to or in analogy to methods which are known per se and which are described in standard works of organic chemistry such as, for example, Houben-Weyl, Methoden der organischen Chemie, Thieme-Verlag, Stuttgart. Preferably, the compounds of formula V are synthesized according to or in analogy to methods which are disclosed for example in WO 2013/174478 A1.

In a further preferred embodiment, the medium in accordance with the present invention optionally comprises one or more chiral dopants, especially when utilized in a flexoelectric device.

The chiral compounds induce a chiral nematic texture with a pitch (P0), which is in a first approximation inversely proportional to the concentration (c) of the chiral material used. The constant of proportionality of this relation is called the helical twisting power (HTP) of the chiral substance and defined by the following equation

$$HTP \equiv 1 / (c \cdot P0) \quad (1)$$

wherein

c is concentration of the chiral compound.

For example, a uniform lying helix texture is realized using a chiral nematic liquid crystal with a short pitch, typically in the range from 0.2 μm to 1 μm, preferably of 1.0 μm or less, in particular of 0.5 μm or less, which is unidirectional aligned with its helical axis parallel to the substrates, e. g. glass plates, of a liquid crystal cell. In this configuration the helical axis of the chiral nematic liquid crystal is equivalent to the optical axis of a birefringent plate.

Preferred are chiral dopants with a high helical twisting power (HTP), in particular those disclosed in WO 98/00428.

Typically used chiral dopants are e.g. the commercially available R/S-5011, CD-1, R/S-811 and CB-15 (from Merck KGaA, Darmstadt, Germany).

In another preferred embodiment, the chiral dopants are preferably selected from formula VI

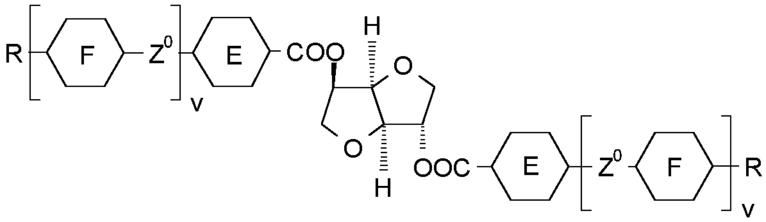

VI

and/or formula VII

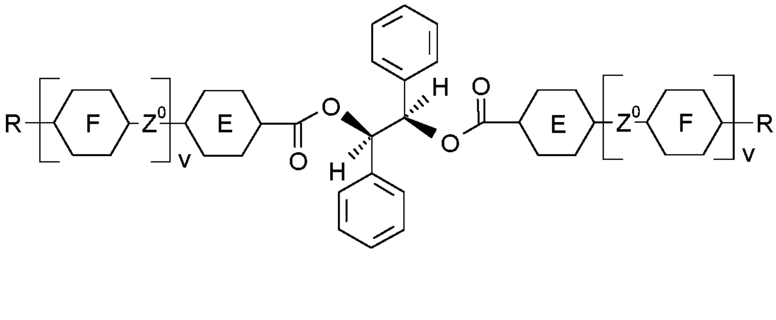

VII

including the respective (S,S) enantiomer,

wherein E and F are each independently 1,4-phenylene ortrans-1,4-cyclohexylene, v is 0 or 1, $Z^0$ is -COO-, -OCO-, $-CH_2CH_2-$ or a single bond, and R is alkyl, alkoxy or alkanoyl with 1 to 12 C atoms.

The compounds of formula VI and their synthesis are described in WO 98/00428. The compounds of formula VII and their synthesis are described in GB 2,328,207.

The above mentioned chiral dopants R/S-5011 and the compounds of formula VI and VII exhibit a very high helical twisting power (HTP), and are therefore particularly useful for the purpose of the present invention.

The liquid crystalline medium preferably comprises preferably 1 to 5, in particular 1 to 3, very preferably 1 or 2 chiral dopants, preferably selected from the above formula VI, and/or formula VII and/or R-5011 or S-5011, very preferably, the chiral compound is R-5011, S-5011.

The amount of chiral compounds in the liquid crystalline medium is preferably from 1 to 15 %, in particular from 0.5 to 10 %, very preferably 0.1 to 5 % by weight of the total mixture.

Further preferred are liquid crystalline media optionally comprising one or more additives selected from the following formula VIII,

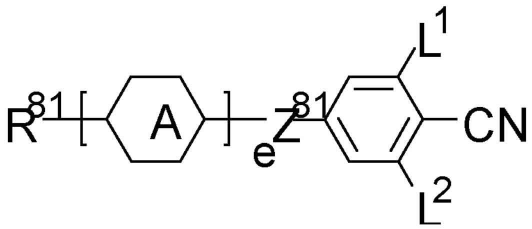

VIII

wherein

$R^{81}$ is alkyl, alkoxy, alkenyl or alkenyloxy with up to 12 C atoms,

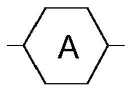

is

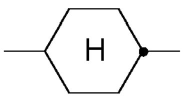 , 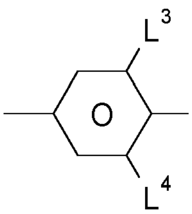 , 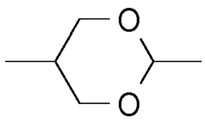 or 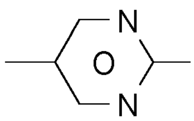 ,

$L^1$ to $L^4$ are each independently H or F,

$Z^{81}$ is -COO-, $-CH_2CH_2-$ or a single bond,

e is 1 or 2

Particularly preferred compounds of formula VIII are selected from the following formulae

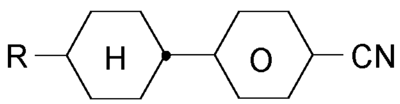

VIIIa

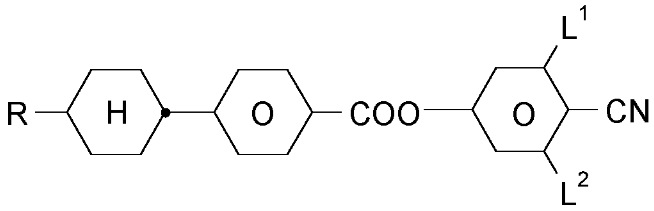

VIIIb

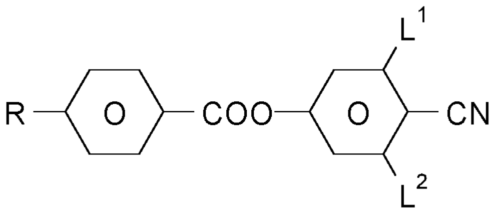

VIIIc

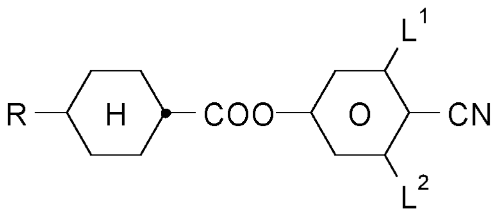

VIIId

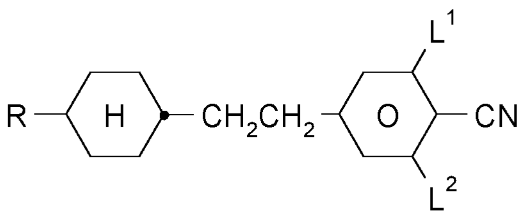

VIIIe

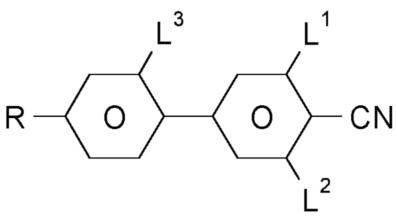

VIIIf

wherein, R has one of the meanings of $R^{81}$ above and $L^1$, $L^2$ and $L^3$ have the above meanings.

The liquid crystalline medium preferably comprises preferably 1 to 5, in particular 1 to 3, very preferably 1 or 2, preferably selected from the above formulae Villa to VIIIf, very preferably from formulae VIIIf.

The amount of suitable additives of formula VIII in the liquid crystalline medium is preferably from 1 to 20 %, in particular from 1 to 15 %, very preferably 1 to 10 % by weight of the total mixture.

The liquid crystal media may contain further additives like for example stabilizers, inhibitors, surface-active compounds, lubricating agents, wetting agents, dispersing agents, hydrophobing agents, adhesive agents, flow improvers, defoaming agents, deaerators, diluents, reactive diluents, auxiliaries, colourants, dyes, pigments or nanoparticles in usual concentrations. The total concentration of these further constituents is in the range of 0.1 % to 10 %, preferably 0.1 % to 6 %, based on the total mixture. The concentrations of the individual compounds used each are preferably in the range of 0.1 % to 3 %.

The concentration of these and of similar additives is not taken into consideration for the values and ranges of the concentrations of the liquid crystal components and compounds of the liquid crystal media in this application. This also holds for the concentration of the dichroic dyes used in the mixtures, which are not counted when the concentrations of the compounds respectively the components of the host medium are specified. The concentration of the respective additives is always given relative to the final doped mixture.

In general, the total concentration of all compounds in the media according to this application is 100 %.

The liquid crystal media according to the present invention consists of several compounds, preferably of 2 to

30, more preferably of 3 to 20 and most preferably of 4 to 16 compounds.

The media in accordance with the present invention exhibit high values of the elastic constant $k_{11}$ and a high flexoelectric coefficient e. The liquid crystal media preferably exhibit a $k_{11}$ < 100 pN, preferably < 20 pN. The liquid crystal media preferably exhibit a $k_{33}$ < 100 pN, preferably < 15 pN. The liquid crystal media preferably exhibit a flexoelectric coefficient $|e_{11}|$ > 0.2 pC/m, preferably > 1 pC/m. The liquid crystal media preferably exhibit a flexoelectric coefficient $|e_{33}|$ > 0.2 pC/m, preferably > 2 pC/m.

The media in accordance with the present invention exhibit high clearing points up to 60°C and higher, preferably up 65°C and higher, and more preferably up to 70°C and higher.

The media in accordance with the present invention exhibit broad nematic phases of 30°C and more, preferably 35°C and more, or even 40°C or more.

The media in accordance with the present invention exhibit broad $N_{TB}$ phases of 30°C and more, preferably 35°C and more, and more preferably of 40°C or more, which exist at temperatures between +40°C to -20°C, preferably between +35°C to -20°C, more preferably between 28°C to -17°C.

The media in accordance with the present invention exhibit broad $N_{TB}$ phases of 30°C and more, preferably 35°C and more, and more preferably of 40°C or more.

The media in accordance with the present invention exhibit high stabilities against crystallization at room temperature of more than 100 h, preferably more than 250 h or more than 1000 h.

The media in accordance with the present invention exhibit high stabilities against crystallization even at low temperatures (LTS). Accordingly the media do not crystallize even at temperatures down to 0°C, preferably down to -10°C, more preferably down to -20°C.

In a preferred embodiment the LC medium comprises:

- 1 to 5, in particular 1 to 3, very preferably 1 or 2 compounds of formula I, preferably selected from formulae Ia-1a, Ia-2a, Ia-2b, Ia-17c, Ia-8e, Ia-3f, Ia-5f, Ia-6f, Ia-12f, and/or Ia-23f, in particular at least one compound selected from compounds of formulae I'a-1 to I'a-11. The amount of compounds of formula I in the liquid crystalline medium as a whole is preferably up to 27% or less, in particular up to 25 % or less, especially up to 20 % or less by weight of the total mixture,
  and

- 1 to 5, in particular 1 to 3, very preferably 1 compounds of formula II, preferably selected from compounds of the above formulae IIa to IId, very preferably at least one compound of formula IIc, in particular the compound of formula IIc-3. The amount of compounds of formula II in the liquid crystalline medium as a whole is at least 25% or more by weight of the total mixture,

- optionally, 1 to 7, in particular 1 to 5, very preferably 1 to 3 compounds of formula III, preferably selected from symmetrical compounds of the above formulae IIa and/or IIIb and/or from non-symmetrical compounds of the above formulae IIIc, very preferably at least one compound of formula IIIb and/or at least one compound of formulae IIIc. The amount of compounds of formula III in the liquid crystalline medium as a whole is preferably from 10 to 70 %, in particular from 20 to 60 %, very preferably 30 to 50 % by weight of the total mixture and preferably from 5 to 30 %, more preferably 10 to 20% of the total mixture of an individual compound of formula III.

- optionally, 1 to 5, in particular 1 to 3, very preferably 1 or 2 compounds of formula IV, preferably selected from the above formulae IV-A and IV-B, very preferably from formulae IV-1 to IV-3. The amount of compounds of formula IV in the liquid crystalline medium as a whole is preferably from 1 to 15 %, in particular from 2 to 10 %, very preferably 3 to 5 % by weight of the total mixture and preferably from 1 to 5 % of the total mixture of an individual compound of formula IV.

- optionally, 1 to 5, in particular 1 to 3, very preferably 1 or 2 compounds of formula V, preferably selected from the above formulae V-1 to V-9, very preferably from formulae V-2 and/or V-5. The amount of compounds of formula V in the liquid crystalline medium as a whole is preferably from 1 to 20 %, in particular from 3 to 15 %, very preferably 5 to 10 % by weight of the total mixture and preferably from 1 to 10 %, more preferably from 2 to 5 % of the total mixture of an individual compound of formula V.

- optionally, 1 to 5, in particular 1 to 3, very preferably 1 or 2 chiral dopants, preferably selected from the above formula VI, and/or formula VII and/or R-5011 or S-5011, very preferably, the chiral compound is R-5011, or S-5011. The amount of chiral compounds in the liquid crystalline medium, if present, is preferably from 1 to 15 %, in particular from 0.5 to 10 %, very preferably 0.1 to 5 % by weight of the total mixture.

- optionally 1 to 5, in particular 1 to 3, very preferably 1 or 2, preferably selected from the above formulae Villa to VIIIf, very preferably from formulae VIIIf. The amount of suitable additives of formula VIII in the liquid crystalline medium, if present, is preferably from 1 to 20 %, in particular from 1 to 15 %, very preferably 1 to 10 % by weight of the total mixture.

- optionally further additives in usual concentrations. The total concentration of these further constituents, if present, is in the range of 0.1 % to 10 %, preferably 0.1 % to 6 %, based on the total mixture. The concentrations of the individual compounds used each are preferably in the range of 0.1 % to 3 %.

In another preferred embodiment, the LC medium of the present invention consists only compounds selected from formula I to III, preferably only compounds selected from formula I to IV, more preferably only compounds selected from formula I to V, and especially only compounds selected from formula I to IV and a chiral dopant.

The compounds forming the LC medium in accordance with the present invention are mixed in conventional way. As a rule, the required amount of the compound used in the smaller amount is dissolved in the compound used in the greater amount. In case the temperature is above the clearing point of the compound used in the higher concentration, it is particularly easy to observe completion of the process of dissolution. It is, however, also possible to prepare the media by other conventional ways, e.g. using so called pre-mixtures, which can be e.g. homologous or eutectic media of compounds or using so called multi-bottle-systems, the constituents of which are ready to use media themselves. Thus the invention also relates to a process for the production of an LC medium as described above and below.

In particular, the invention relates to a process for the production of an LC medium comprising the steps of mixing not more than 30% of one or more compounds of formula I,

$$R^{11}\text{-}A^{11}\text{-}A^{12}\text{-}(CH_2)_s\text{-}A^{13}\text{-}A^{14}\text{-}R^{12} \qquad \text{I}$$

with at least 25% of one or more compounds of formula II,

$$R^{21}\text{-}A^{21}\text{-}A^{22}\text{-}(A^{23})_u\text{-}Z^{21}\text{-}(CH_2)_t\text{-}Z^{22}\text{-}A^{24}\text{-}A^{25}\text{-}A^{26}\text{-}R^{22} \qquad \text{II}$$

wherein $R^{11}$ to $R^{22}$, to $A^{26}$, $Z^{21}$, $Z^{22}$, s, t, and u have one the meanings as given herein below, with at least one compound selected from compounds of formula III, and/or IV, and/or V.

The liquid crystalline media in accordance with the present invention can be used in liquid crystal devices, such as STN, TN, AMD-TN, temperature compensation, guest-host, phase change or surface stabilized or polymer stabilized cholesteric texture (SSCT, PSCT) displays, in active and passive optical elements like polarizers, compensators, reflectors, alignment layers, colour filters or holographic elements, in adhesives, synthetic resins with anisotropic mechanical properties, cosmetics, diagnostics, liquid crystal pigments, for decorative and security applications, in nonlinear optics, optical information storage or as chiral dopants.

The media in accordance with the present invention are particularly useful for flexoelectric liquid crystal display applications, such as, for example, devices of the ULH or USH mode.

Thus, another object of the present invention is a liquid crystal device, preferably a flexoelectric device, comprising a medium, which comprises not more than 30% of one or more compounds of formula I,

$$R^{11}\text{-}A^{11}\text{-}A^{12}\text{-}(CH_2)_s\text{-}A^{13}\text{-}A^{14}\text{-}R^{12} \qquad \text{I}$$

and at least 25% of one or more compounds of formula II,

$$R^{21}\text{-}A^{21}\text{-}A^{22}\text{-}(A^{23})_u\text{-}Z^{21}\text{-}(CH_2)_t\text{-}Z^{22}\text{-}A^{24}\text{-}A^{25}\text{-}A^{26}\text{-}R^{22} \qquad \text{II}$$

wherein $R^{11}$ to $R^{22}$, to $A^{26}$, $Z^{21}$, $Z^{22}$, s, t, and u have one the meanings as given herein above.

A flexoelectric display according to a preferred embodiment of the present invention comprises two plane parallel substrates, preferably glass plates covered with a transparent conductive layer such as indium tin oxide (ITO) on their inner surfaces, optionally alignment layers and a medium, comprising a medium, which comprises not more than 30% of one or more compounds of formula I,

$$R^{11}\text{-}A^{11}\text{-}A^{12}\text{-}(CH_2)_s\text{-}A^{13}\text{-}A^{14}\text{-}R^{12} \qquad \text{I}$$

and at least 25% of one or more compounds of formula II,

$$R^{21}\text{-}A^{21}\text{-}A^{22}\text{-}(A^{23})_u\text{-}Z^{21}\text{-}(CH_2)_t\text{-}Z^{22}\text{-}A^{24}\text{-}A^{25}\text{-}A^{26}\text{-}R^{22} \qquad \text{II}$$

wherein $R^{11}$ to $R^{22}$, to $A^{26}$, $Z^{21}$, $Z^{22}$, s, t, and u have one the meanings as given herein above and a chiral dopant as described above and below.

If an electrical field is applied to this configuration normal to the helical axis the optical axis is rotated in the plane of the cell, similar as the director of a ferroelectric liquid crystal rotate as in a surface stabilized ferroelectric liquid crystal display.

The field induces a splay bend structure in the director which is accommodated by a tilt in the optical axis. The angle of the rotation of the axis is in first approximation directly and linearly proportional to the strength of the electrical field. The optical effect is best seen when the liquid crystal cell is placed between crossed polarizers with the optical axis in the unpowered state at an angle of 22.5° to the absorption axis of one of the polarizers. This angle of 22.5° is also the ideal angle of rotation of the electric field, as thus, by the inversion the electrical field, the optical axis is rotated by 45° and by appropriate selection of the relative orientations of the preferred direction of the axis of the helix, the absorption axis of the polarizer and the direction of the electric field, the optical axis can be switched from parallel to one polarizer to the centre angle between both polarizers. The optimum contrast is then achieved when the total angle of the switching of the optical axis is 45°. In that case the arrangement can be used as a switchable quarter wave plate, provided the optical retardation, i. e. the product of the effective birefringence of the liquid crystal and the cell gap, is selected to be the quarter of the wave length. In this context the wavelength referred to is 550 nm, the wavelength for which the sensitivity of the human eye is highest, unless explicitly stated otherwise.

The angle of rotation of the optical axis ($\Phi$) is given in good approximation by the formula:

$$\tan \Phi = \bar{e}\, P_0\, E / (2\, \pi\, K)$$

wherein

$P_0$ is the undisturbed pitch of the cholesteric liquid crystal,
$\bar{e}$ is the average [$\bar{e} = ½ (e_{11} + e_{33})$] of the splay flexoelectric coefficient ($e_{11}$) and the bend flexoelectric coefficient ($e_{33}$),
E is the electrical field strength and
$K$ is the average [$K = ½ (k_{11} + k_{33})$] of the splay elastic constant ($k_{11}$) and the bend elastic constant ($k_{33}$)

and wherein

$\bar{e} / K$ is called the flexo-elastic ratio.

This angle of rotation is half the switching angle in a flexoelectric switching element.

The response time ($\tau$) of this electro-optical effect is given in good approximation by the formula:

$$\tau = [P_0/(2\, \pi)]^2 \cdot \gamma / K$$

wherein

$\gamma$ is the effective viscosity coefficient associated with the distortion of the helix.

The flexoelectric effect is characterized by fast response times typically ranging from 6 μs to 100 μs. It further features excellent grey scale capability.

There is a critical field ($E_c$) to unwind the helix, which can be obtained from equation

$$E_c = (\pi^2 / P_0) \cdot [k_{22}/(\varepsilon_0 \cdot \Delta\varepsilon)]^{1/2}$$

wherein

$k_{22}$ is the twist elastic constant,
$\varepsilon_0$ is the permittivity of vacuum and
$\Delta\varepsilon$ is the dielectric anisotropy of the liquid crystal.

The inventive media in accordance with the present invention can be aligned in their cholesteric phase into different states of orientation by methods that are known to the expert, such as surface treatment or electric fields. For example, they can be aligned into the planar (Grandjean) state, into the focal conic state or into the homeotropic state.

The term "planar alignment" or orientation of a liquid crystal or mesogenic material in a display cell or on a substrate means that the mesogenic groups in the liquid crystal or mesogenic material are oriented substantially parallel to the plane of the cell or substrate, respectively.

The term "homeotropic alignment" or orientation of a liquid crystal or mesogenic material in a display cell or on a substrate means that the mesogenic groups in the liquid crystal or mesogenic material are oriented substantially perpendicular to the plane of the cell or substrate, respectively.

The switching between different states of orientation according to a preferred embodiment of the present invention is exemplarily described below in detail.

According to this preferred embodiment, the sample is placed into a cell comprising two plane-parallel glass plates coated with electrode layers, e.g. ITO layers, and aligned in its cholesteric phase into a planar state wherein the axis of the cholesteric helix is oriented normal to the cell walls. This state is also known as Grandjean state, and the texture of the sample, which is observable e.g. in a polarization microscope, as Grandjean texture. Planar alignment can be achieved e.g. by surface treatment of the cell walls, for example by rubbing and/or coating with an alignment layer such as polyimide.

A Grandjean state with a high quality of alignment and only few defects can further be achieved by heating the sample to the isotropic phase, subsequently cooling to the chiral nematic phase at a temperature close to the chiral nematic-isotropic phase transition, and flow alignment by lightly pressing the cell.

In the planar state, the sample shows selective reflection of incident light, with the central wavelength of reflection depending on the helical pitch and the mean refractive index of the material.

When an electric field is applied to the electrodes, for example with a frequency from 10 Hz to 1 kHz, and an amplitude of up to 12 $V_{rms}/\mu m$, the sample is being switched into a homeotropic state where the helix is unwound and the molecules are oriented parallel to the field, i.e. normal to the plane of the electrodes. In the homeotropic state, the sample is transmissive when viewed in normal daylight, and appears black when being put between crossed polarizers.

Upon reduction or removal of the electric field in the homeotropic state, the sample adopts a focal conic texture, where the molecules exhibit a helically twisted structure with the helical axis being oriented perpendicular to the field, i.e. parallel to the plane of the electrodes. A focal conic state can also be achieved by applying only a weak electric field to a sample in its planar state. In the focal conic state the sample is scattering when viewed in normal daylight and appears bright between crossed polarizers.

A sample of a medium in accordance with the present invention in different states of orientation exhibits different transmission of light. Therefore, the respective state of orientation, as well as its quality of alignment, can be controlled by measuring the light transmission of the sample depending on the strength of the applied electric field. Thereby it is also possible to determine the electric field strength required to achieve specific states of orientation and transitions between these different states.

In a sample of a medium in accordance with the present invention, the above described focal conic state consists of many disordered birefringent small domains. By applying an electric field greater than the field for nucleation of the focal conic texture, preferably with additional shearing of the cell, a uniformly aligned texture is achieved where the helical axis is parallel to the plane of the electrodes in large, well-aligned areas. In accordance with the literature on state of the art chiral nematic materials, such as P. Rudquist et al., Liq. Cryst. 23 (4), 503 (1997), this texture is also called uniformly-lying helix (ULH) texture. This texture is required to characterize the flexoelectric properties of the inventive compound.

In a preferred embodiment of the present invention, the sequence of textures typically observed in a sample having a $\Delta\varepsilon > 0$ on a rubbed polyimide substrate upon increasing or decreasing electric field is given below:

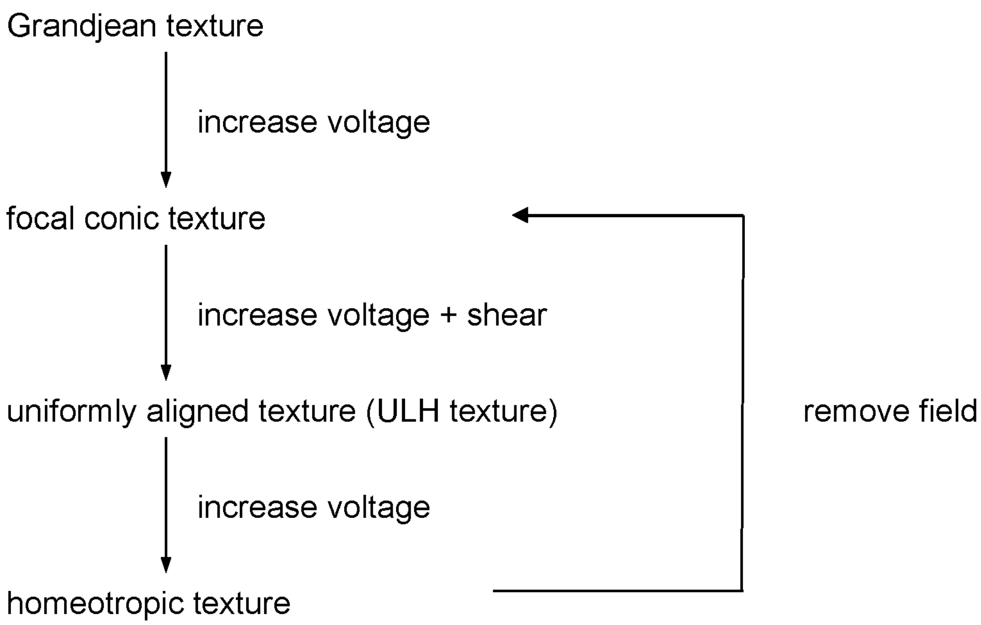


Starting from the ULH texture, the inventive media can be subjected to flexoelectric switching by application of an electric field. This causes rotation of the optic axis of the material in the plane of the cell substrates, which leads to a change in transmission when placing the material between crossed polarizers. The flexoelectric switching of inventive materials is further described in detail in the introduction above and in the examples.

It is also possible to obtain the ULH texture, starting from the focal conic texture, by applying an electric field with a high frequency, of for example 10 kHz, to the sample whilst cooling slowly from the isotropic phase into the cholesteric phase and shearing the cell. The field frequency may differ for different compounds.

Apart from the use in flexoelectric devices, the media in accordance with the present invention are also suitable for other types of displays and other optical and electro optical applications, such as optical compensation or polarizing films, colour filters, reflective cholesterics, optical rotatory power and optical information storage.

Without further elaboration, it is believed that one skilled in the art can, using the preceding description, utilize the present invention to its fullest extent. The following examples are, therefore, to be construed as merely illustrative and not limitative of the remainder of the disclosure in any way whatsoever.

Unless the context clearly indicates otherwise, as used herein plural forms of the terms herein are to be construed as including the singular form and vice versa.

Throughout the description and claims of this specification, the words "comprise" and "contain" and variations of the words, for example "comprising" and "comprises", mean "including but not limited to", and are not intended to (and do not) exclude other components.

Throughout the present application it is to be understood that the angles of the bonds at a C atom being bound to three adjacent atoms, e.g. in a C=C or C=O double bond or e.g. in a benzene ring, are 120° and that the angles of the bonds at a C atom being bound to two adjacent atoms, e.g. in a C=C or in a C=N triple bond or in an allylic position C=C=C are 180°, unless these angles are otherwise restricted, e.g. like being part of small rings, like 3-, 5- or 5-atomic rings, notwithstanding that in some instances in some structural formulae these angles are not represented exactly.

It will be appreciated that variations to the foregoing embodiments of the invention can be made while still falling within the scope of the invention. Each feature disclosed in this specification, unless stated otherwise, may be replaced by alternative features serving the same, equivalent or similar purpose. Thus, unless stated otherwise, each feature disclosed is one example only of a generic series of equivalent or similar features.

All of the features disclosed in this specification may be combined in any combination, except combinations where at least some of such features and/or steps are mutually exclusive. In particular, the preferred features of the invention are applicable to all aspects of the invention and may be used in any combination. Likewise, features described in non-essential combinations may be used separately (not in combination).

The parameter ranges indicated in this application all include the limit values including the maximum permissible errors as known by the expert. The different upper and lower limit values indicated for various ranges of properties in combination with one another give rise to additional preferred ranges.

The total concentration of all compounds in the media according to this application is 100 %. All concentrations are given in % w/w, unless explicitly stated otherwise.

In the foregoing and in the following examples, unless otherwise indicated, all temperatures are set forth

uncorrected in degrees Celsius and all parts and percentages are by weight.

It goes without saying to the person skilled in the art that the LC media may also comprise compounds in which, for example, H, N, O, Cl, F have been replaced by the corresponding isotopes.

The following abbreviations are used to illustrate the liquid crystalline phase behaviour of the compounds: K = crystalline; N = nematic; $N_{TB}$ = second nematic; S or Sm = smectic; Ch = cholesteric; I = isotropic; Tg = glass transition. The numbers between the symbols indicate the phase transition temperatures in °C.

In the present application and especially in the following examples, the structures of the liquid crystal compounds are represented by abbreviations, which are also called "acronyms". The transformation of the abbreviations into the corresponding structures is straight forward according to the following three tables A to C.

All groups $C_nH_{2n+1}$, $C_mH_{2m+1}$, and $C_lH2_{l+1}$are preferably straight chain alkyl groups with n, m and l C-atoms, respectively, all groups $C_nH_{2n}$, $C_mH_{2m}$ and $C_lH_{2l}$ are preferably $(CH_2)_n$, $(CH_2)_m$ and $(CH_2)_l$, respectively and -CH=CH- preferably is *trans*- respectively *E* vinylene.

Table A lists the symbols used for the ring elements, table B those for the linking groups and table C those for the symbols for the left hand and the right hand end groups of the molecules.

**Table A: Ring Elements**

| | | | |
|---|---|---|---|
| **C** | 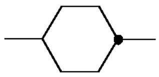 | **P** | 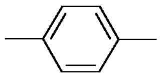 |
| **D** | 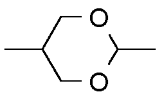 | **DI** | 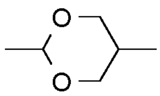 |
| **A** | 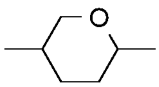 | **AI** | 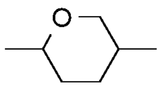 |
| **G** | 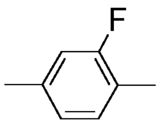 | **GI** | 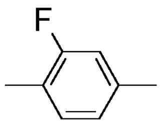 |
| **G(Cl)** | 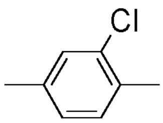 | **GI(Cl)** | 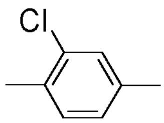 |
| **G(1)** | 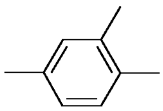 | **GI(1)** | 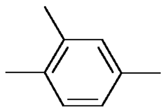 |
| **U** | 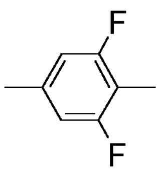 | **UI** | 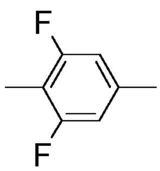 |
| **Y** | 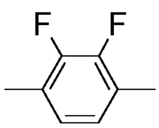 | | |
| **M** | 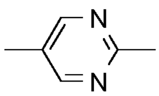 | **MI** | 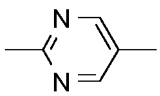 |
| **N** | 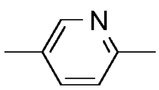 | **NI** | 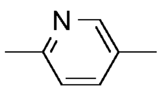 |

(continued)

| | | | |
|---|---|---|---|
| **np** | 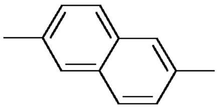 | | |
| **th** | 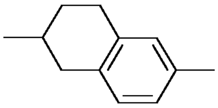 | **thl** | 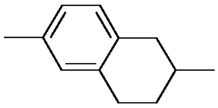 |
| **dh** | 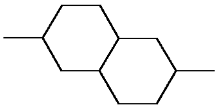 | | |
| **L** | 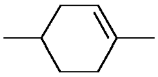 | **Ll** | 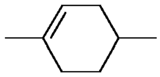 |
| **F** | 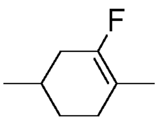 | **Fl** | 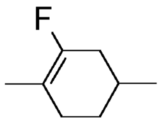 |

**Table B: Linking Groups**

| | | | |
|---|---|---|---|
| **n** | $(-CH_2-)_n$ | "n" is an integer except 0 and 2 | |
| **E** | $-CH_2-CH_2-$ | | |
| **V** | -CH=CH- | | |
| **T** | -C≡C- | | |
| **W** | $-CF_2-CF_2-$ | | |
| **B** | -CF=CF- | | |
| **Z** | -CO-O- | **ZI** | -O-CO- |
| **X** | -CF=CH- | **XI** | -CH=CF- |
| **1O** | $-CH_2-O-$ | **O1** | $-O-CH_2-$ |
| **Q** | $-CF_2-O-$ | **QI** | $-O-CF_2-$ |

**Table C: End Groups**

| **Left hand side, used alone or in combination with others** | | **Right hand side, used alone or in combination with others** | |
|---|---|---|---|
| **-n-** | $C_nH_{2n+1}-$ | **-n** | $-C_nH_{2n+1}$ |
| **-nO-** | $CnH_{2n+1}-O-$ | **-nO** | $-O-C_nH_{2n+1}$ |
| **-V-** | $CH_2=CH-$ | **-V** | $-CH=CH_2$ |
| **-nV-** | $C_nH_{2n+1}-CH=CH-$ | **-nV** | $-C_nH_{2n}-CH=CH_2$ |
| **-Vn-** | $CH_2=CH-\ C_nH_{2n}-$ | **-Vn** | $-CH=CH-C_nH_{2n+1}$ |
| **-nVm-** | $CnH_{2n+1}-CH=CH-C_mH_{2m}-$ | **-nVm** | $-C_nH_{2n}-CH=CH-C_mH_{2m+1}$ |
| **-N-** | N≡C- | **-N** | -C≡N |
| **-S-** | S=C=N- | **-S** | -N=C=S |
| **-F-** | F- | **-F** | -F |
| **-CL-** | Cl- | **-CL** | -Cl |
| **-M-** | $CFH_2-$ | **-M** | $-CFH_2$ |
| **-D-** | $CF_2H-$ | **-D** | $-CF_2H$ |
| **-T-** | $CF_3-$ | **-T** | $-CF_3$ |
| **-MO-** | $CFH_2O-$ | **-OM** | $-OCFH_2$ |
| **-DO-** | $CF_2HO-$ | **-OD** | $-OCF_2H$ |

(continued)

| Left hand side, used alone or in combination with others | | Right hand side, used alone or in combination with others | |
|---|---|---|---|
| **-TO-** | $CF_3O$- | **-OT** | -$OCF_3$ |
| **-A-** | H-C≡C- | **-A** | -C≡C-H |
| **-nA-** | $C_nH_{2n+1}$-C≡C- | **-An** | -C≡C-$C_nH_{2n+1}$ |
| **-NA-** | N≡C-C≡C- | **-AN** | -C≡C-C≡N |

| Left hand side, used in combination with others only | | Right hand side, used in combination with others only | |
|---|---|---|---|
| **-...n...-** | $(-CH_2-)_n$ | **-...n...** | $(-CH_2-)_n$ |
| **-...M...-** | -CFH- | **-...M...** | -CFH- |
| **-...D...-** | -$CF_2$- | **-...D...** | -$CF_2$- |
| **-...V...-** | -CH=CH- | **-...V...** | -CH=CH- |
| **-...Z...-** | -CO-O- | **-...Z...** | -CO-O- |
| **-...ZI...-** | -O-CO- | **-...ZI...** | -O-CO- |
| **-...K...-** | -CO- | **-...K...** | -CO- |
| **-...W...-** | -CF=CF- | **-...W...** | -CF=CF- |

wherein n und m each are integers and three points "..." indicate a space for other symbols of this table.

Examples

Typically a 5.6 μm thick cell, having an anti-parallel rubbed PI alignment layer, is filled on a hotplate at a temperature at which the flexoelectric mixture in the isotropic phase.

After the cell has been filled, the phase transitions including clearing point, and the crystallization behavior are determined using Differential Scanning Calorimetry (DSC) and verified by optical inspection. For optical phase transition measurements, a Mettler FP90 hot-stage controller connected to a FP82 hot-stage is used to control the temperature of the cell. The temperature is increased from ambient temperature at a rate of 5 degrees C per minute, until the onset of the isotropic phase is observed. The texture change is observed through crossed polarizers using an Olympus BX51 microscope and the respective temperature noted.

Wires are then attached to the ITO electrodes of the cell using indium metal. The cell is secured in a Linkam THMS600 hot-stage connected to a Linkam TMS93 hot-stage controller. The hot-stage is secured to a rotation stage in an Olympus BX51 microscope.

The cell is heated until the liquid crystal is completely isotropic. The cell is then cooled under an applied electric field until the sample is completely nematic. The driving waveform is supplied by a Tektronix AFG3021B arbitrary function generator, which is sent through a Newtons4th LPA400 power amplifier before being applied to the cell. The cell response is monitored with a Thorlabs PDA55 photodiode. Both input waveforms and optical response are measured using a Tektronix TDS 2024B digital oscilloscope.

In order to measure the flexoelectric response of the material, the change in the size of the tilt of the optic axis is measured as a function of increasing voltage. This is achieved by using the equation:

$$\tan \varphi = \frac{P_0}{2\pi} \frac{e}{K} E$$

wherein φ is the tilt in the optic axis from the original position (i.e. when E = 0), E is the applied field, K is the elastic constant (average of $K_1$ and $K_3$) and e is the flexoelectric coefficient (where $e = e_1 + e_3$). The applied field is monitored using a HP 34401A multimeter. The tilt angle is measured using the aforementioned microscope and oscilloscope. The undisturbed cholesteric pitch, $P_0$, is measured using an Ocean Optics USB4000 spectrometer attached to a computer. The selective reflection band is obtained and the pitch determined from the spectral data.

The media shown in the following examples are well suitable for use in ULH-displays. To that end an appropriate concentration of the chiral dopant or dopants used has to be applied in order to achieve a typical cholesteric pitch of 350 to 275 nm.

Reference Example 1: Mixture M1

| Composition | | |
|---|---|---|
| Compound | | |
| No. | Abbreviation | Conc. /% |
| 1 | N-PP-ZI-9-Z-GP-F | 15.0 |
| 2 | F-PGI-ZI-9-Z-PUU-N | 20.0 |
| 3 | N-UIUI-9-UU-N | 10.0 |
| 4 | N-PGI-ZI-9-ZGU-F | 15.0 |
| 5 | F-PGI-9-GP-F | 15.0 |
| 6 | N-PZIP-7-PZP-N | 4.0 |
| 7 | N-GIZIP-7-PZG-N | 4.0 |
| 8 | N-PP-ZI-7-GP-N | 5.0 |
| 9 | F-PGI-ZI-5-Z-GP-F | 12.0 |
| Σ | | 100.0 |

This mixture is investigated as described above.

It has the following phase sequence:

I 69°C N 26°C $N_{TB}$ -17°C $T_g$

The mixture M1 shows no crystallisation upon cooling to -50°C.

In cells and in the bulk this mixture is stable at room temperature (>150 hours).

Comparative Mixture Example 1: Mixture C1 (WO 2013/174481)

| Composition | | |
|---|---|---|
| Compound | | |
| No. | Abbreviation | Conc. /% |
| 1 | R-5011 | 1.8 |
| 2 | N-GIGI-ZI-9-Z-GG-N | 8.5 |
| 3 | N-PGI-ZI-9-Z-GP-N | 8.5 |
| 4 | F-PGI-ZI-9-Z-GP-F | 16.8 |
| 5 | F-UIGI-ZI-9-Z-GP-N | 22.6 |
| 6 | F-PGI-ZI-9-Z-PUU-N | 8.4 |
| 7 | N-GIGI-9-GG-N | 25.1 |
| 8 | N-UIUI-9-UU-N | 8.4 |
| Σ | | 100.0 |

This mixture is investigated as described above.

The mixture exhibits a $N_{TB}$ transition at 30°C and crystallizes quickly upon further cooling. Consequently, experiments with respect to the elucidation of the $N_{TB}$ phase can only be made at temperatures above 35°C.

Comparative Mixture Example 2: Mixture C2

| Composition | | |
|---|---|---|
| Compound | | |
| No. | Abbreviation | Conc. /% |
| 1 | F-PGI-ZI-O-9-O-GP-F | 24.45 |
| 2 | F-PGI-ZI-O-9-O-PP-N | 24.45 |
| 3 | F-PGI-ZI-9-Z-GP-F | 24.45 |
| 4 | N-PP-ZI-9-Z-GP-F | 24.45 |
| 5 | R-5011 | 2.20 |
| Σ | | 100.0 |

This mixture is investigated as described above.

It has the following phase sequence:

I 81.7°C N 27.5°C $N_{TB}$ 21°C

The mixture C2 shows crystallization upon cooling to room temperature within 30 min.

## Claims

1. Liquid crystal medium comprising one or more compounds of formula I,

$$R^{11}\text{-}A^{11}\text{-}A^{12}\text{-}(CH_2)_s\text{-}A^{13}\text{-}A^{14}\text{-}R^{12} \qquad \text{I}$$

in a concentration of up to 30% or less,
and one or more compounds of formula II,

$$R^{21}\text{-}A^{21}\text{-}A^{22}\text{-}(A^{23})_u\text{-}Z^{21}\text{-}(CH_2)_t\text{-}Z^{22}\text{-}A^{24}\text{-}A^{25}\text{-}A^{26}\text{-}R^{22} \qquad \text{II}$$

in a concentration of 25% or more,
wherein

$R^{11}$ to $R^{22}$ are each independently H, F, Cl, CN, NCS or a straight-chain or branched alkyl group, which may be unsubstituted, mono- or polysubstituted by halogen or CN, it being also possible for one or more non-adjacent $CH_2$ groups to be replaced, in each occurrence independently from one another, by -O-, -S-, -NH-, -N($CH_3$)-, -CO-, -COO-, -OCO-, -O-CO-O-, -S-CO-, -CO-S-, -CH=CH-, -CH=CF-, -CF=CF- or -C≡C- in such a manner that oxygen atoms are not linked directly to one another,

$A^{11}$ to $A^{26}$, are each independently in each occurrence 1,4-phenylene, wherein in addition one or more CH groups may be replaced by N, trans-1,4-cyclohexylene in which, in addition, one or two non-adjacent $CH_2$ groups may be replaced by O and/or S, 1,4-cyclohexenylene, 1,4-bicyclo-(2,2,2)-octylene, piperidine-1,4-diyl, naphthalene-2,6-diyl, decahydronaphthalene-2,6-diyl, 1,2,3,4-tetrahydro-naphthalene2,6-diyl, cyclobutane-1,3-diyl, spiro[3.3]heptane-2,6-diyl or dispiro[3.1.3.1]decane-2,8-diyl, it being possible for all these groups to be unsubstituted, mono-, di-, tri- or tetrasubstituted with F, Cl, CN or alkyl, alkoxy, alkylcarbonyl or alkoxycarbonyl groups, wherein one or more H atoms may be substituted by F or Cl,

$Z^{21}$ and $Z^{22}$ are each independently in each occurrence, -COO-, -OCO-, -O-CO-O-, -$OCH_2$-, -$CH_2O$-, -$OCF_2$-, -$CF_2O$-, -$CH_2CH_2$-, -$(CH_2)_4$-, -$CF_2CF_2$-, -CH=CH-, -CF=CF-, -CH=CH-COO-, -OCO-CH=CH- or -C≡C-, optionally substituted with one or more of F, S and/or Si,

s and t denotes an integer from 1 to 15, and

u denotes 0 or 1.

2. Liquid crystal medium according to claim 1, comprising one, two, three or more compounds of formula III,

$$R^{31}\text{-}A^{31}\text{-}A^{32}\text{-}Z^{31}\text{-}(CH2)_z\text{-}Z^{32}\text{-}A^{33}\text{-}A^{34}\text{-}R^{32} \qquad \text{III}$$

wherein

$R^{31}$ and $R^{32}$ have each and independently one of the meanings as given above for $R^{11}$ in claim 1,
$A^{31}$ to $A^{34}$ have each and independently one of the meanings as given above for $A^{11}$ in claim 1,
$Z^{31}$ and $Z^{32}$ are each independently in each occurrence, -COO-, -OCO-, -O-CO-O-, $-OCH_2-$, $-CH_2O-$, $-OCF_2-$, $-CF_2O-$, $-CH_2CH_2-$, $-(CH_2)_4-$, $-CF_2CF_2-$, -CH=CH-, -CF=CF-, -CH=CH-COO-, -OCO-CH=CH- or -C≡C-, optionally substituted with one or more of F, S and/or Si, and
z denotes an integer from 1 to 15.

**3.** Liquid crystal medium according to claim 1 or 2, comprising one or more compounds of formula IV,

$$R^{41}\text{-}A^{41}\text{-}A^{42}\text{-}Z^{41}\text{-}(CH_2)_w\text{-}A^{43}\text{-}A^{44}\text{-}R^{42} \qquad \text{IV}$$

wherein

$R^{41}$ and $R^{42}$ have each and independently one of the meanings as given above for $R^{11}$ in claim 1,
$A^{31}$ to $A^{34}$ have each and independently one of the meanings as given above for $A^{11}$ in claim 1,
$Z^{41}$ denotes -O-, -COO-, -OCO-, -O-CO-O-, $-OCH_2-$, $-CH_2O$, $-CH_2CH_2-$, $-(CH_2)_4-$, $-CF_2CF_2-$, -CH=CH-, -CF=CF-, -CH=CH-COO-, -OCO-CH=CH- or -C≡C-, optionally substituted with one or more of F, S and/or Si, and
w denotes an integer from 1 to 15.

**4.** Liquid crystal medium according to one or more of claims 1 to 3, comprising one, two, three or more compounds of formula V,

$$R^{51}\text{-}A^{51}\text{-}Z^{51}\text{-}A^{52}\text{-}(Z^{52}\text{-}A^{53})_l\text{-}(CH_2)_p\text{-}(A^{54}\text{-}Z^{53}\text{-})_m A^{55}\text{-}Z^{54}\text{-}A^{56}\text{-}R^{52} \qquad \text{V}$$

wherein

$R^{51}$ and $R^{52}$ have each and independently one of the meanings as given above for $R^{11}$ in claim 1,
$A^{51}$ to $A^{56}$ have each and independently one of the meanings as given above for $A^{11}$ in claim 1,
$Z^{51}$ to $Z^{54}$ each and independently denotes -COO-, -OCO-, -O-CO-O-, $-OCH_2-$, $-CH_2O-$, $-CH_2CH_2-$, $-(CH_2)_4-$, $-OCF_2-$, $-CF_2O-$, $-CF_2CF_2-$, -CH=CH-, -CF=CF-, -CH=CH-COO-, -OCO-CH=CH- or -C≡C-, optionally substituted with one or more of F, S and/or Si, or a single bond, with the proviso that at least one of $Z^{51}$ to $Z^{54}$ is not a single bond,
p denotes an integer from 1 to 15, and
l and m each and independently denotes 0 or 1.

**5.** Liquid crystal medium according to one or more of claims 1 to 4, comprising one or more chiral dopants.

**6.** Liquid crystal medium according to one or more of claims 1 to 5, comprising one or more additives selected from the following formula VIII,

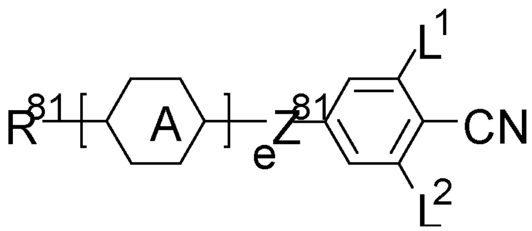

VIII

wherein

$R^{81}$ is alkyl, alkoxy, alkenyl or alkenyloxy with up to 12 C atoms,

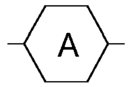

is

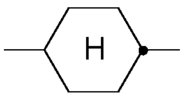 , 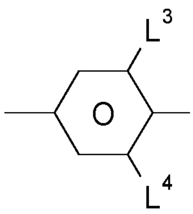 , 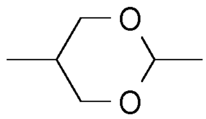 or 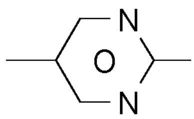 ,

$L^1$ to $L^4$ are each independently H or F,
$Z^{81}$ is -COO-, $-CH_2CH_2-$ or a single bond, and
e is 1 or 2.

**7.** Liquid crystal medium according to one or more of claims 1 to 6, **characterised in that** the amount of compounds of formula I in the medium as a whole is up to 27% or less.

**8.** Liquid crystal medium according to one or more of claims 2 to 7, **characterized in that** the amount of compounds of formula III in the medium as a whole is from 10 to 70 %.

**9.** Liquid crystal medium according to one or more of claims 3 to 8, **characterized in that** the amount of compounds of formula IV in the medium as a whole is from 1 to 15 %.

**10.** Liquid crystal medium according to one or more of claims 4 to 9, **characterized in that** the amount of compounds of formula V in the medium as a whole is from 1 to 20 %.

**11.** Liquid crystal medium according to one or more of claims 5 to 10, **characterized in that** the amount of chiral compounds in the medium as a whole is from 1 to 15 %.

**12.** Liquid crystal medium according to one or more of claims 6 to 11, **characterized in that** the amount of compounds of formula VIII in the medium as a whole is from 1 to 20 %.

**13.** Process for the production of a liquid crystal medium comprising the steps of mixing up to 30% or less of one or more compounds of formula I,

$$R^{11}\text{-}A^{11}\text{-}A^{12}\text{-}(CH_2)_s\text{-}A^{13}\text{-}A^{14}\text{-}R^{12} \qquad \text{I}$$

with at least 25% or more of one or more compounds of formula II,

$$R^{21}\text{-}A^{21}\text{-}A^{22}\text{-}(A^{23})_u\text{-}Z^{21}\text{-}(CH_2)_t\text{-}Z^{22}\text{-}A^{24}\text{-}A^{25}\text{-}A^{26}\text{-}R^{22} \qquad \text{II}$$

wherein $R^{11}$ to $R^{22}$, $A^{11}$ to $A^{26}$ $Z^{21}$, $Z^{22}$, s, t, and u have one the meanings as given above in claim 1, with at least one compound selected from compounds of formula III, and/or IV, and/or V.

**14.** Use of a liquid crystal medium according to one or more of claims 1 to 12, in a liquid crystal device.

**15.** Liquid crystal device comprising a liquid crystal medium according to one or more of claims 1 to 12.

**16.** Liquid crystal device according to claim 15, **characterized in that** it is a flexoelectric device.

**Patentansprüche**

**1.** Flüssigkristallmedium enthaltend eine oder mehrere Verbindungen der Formel I

$$R^{11}\text{-}A^{11}\text{-}A^{12}\text{-}(CH2)_s\text{-}A^{13}\text{-}A^{14}\text{-}R^{12} \qquad \text{I}$$

in einer Konzentration von bis zu 30% oder weniger und eine oder mehrere Verbindungen der Formel II

$$R^{21}\text{-}A^{21}\text{-}A^{22}\text{-}(A^{23})_u\text{-}Z^{21}\text{-}(CH_2)_t\text{-}Z^{22}\text{-}A^{24}\text{-}A^{25}\text{-}A^{26}\text{-}R^{22} \qquad \text{II}$$

in einer Konzentration von 25% oder mehr, bei denen

$R^{11}$ bis $R^{22}$ jeweils unabhängig H, F, Cl, CN, NCS oder eine geradkettige oder verzweigte Alkylgruppe sind, die unsubstituiert oder ein- oder mehrfach durch Halogen oder CN substituiert sein kann, wobei auch eine oder mehrere nicht benachbarte $CH_2$-Gruppen bei jedem Auftreten unabhängig voneinander so durch -O-, -S-, -NH-, -N($CH_3$)-, -CO-, -COO-, -OCO-, -O-CO-O-, -S-CO-, -CO-S-, -CH=CH-, -CH=CF-, -CF=CF- oder -C=C- ersetzt sein können, dass Sauerstoffatome nicht direkt miteinander verknüpft sind,
$A^{11}$ bis $A^{26}$ jeweils unabhängig bei jedem Auftreten 1,4-Phenylen, bei dem zusätzlich eine oder mehrere CH-Gruppen durch N ersetzt sein können, trans-1,4-Cyclohexylen, worin zusätzlich eine oder zwei nicht benachbarte $CH_2$-Gruppen durch O und/oder S ersetzt sein können, 1,4-Cyclohexenylen, 1,4-Bicyclo-(2,2,2)-octylen, Piperidin-1,4-diyl, Naphthalin-2,6-diyl, Decahydronaphthalin-2,6-diyl, 1,2,3,4-Tetrahydro-naphthalin-2,6-diyl, Cyclobutan-1,3-diyl, Spiro[3.3]heptan-2,6-diyl oder Dispiro[3.1.3.1]decan-2,8-diyl sind, wobei alle diese Gruppen unsubstituiert oder ein-, zwei-, dreioder vierfach mit F, Cl, CN oder Alkyl-, Alkoxy-, Alkylcarbonyl- oder Alkoxycarbonylgruppen, bei denen ein oder mehrere H-Atome durch F oder Cl substituiert sein können, substituiert sein können,
$Z^{21}$ und $Z^{22}$ jeweils unabhängig bei jedem Auftreten -COO-, -OCO-, -O-CO-O-, -$OCH_2$-, -$CH_2O$-, -$OCF_2$-, -$CF_2O$-, -$CH_2CH_2$-, -$(CH_2)_4$-, -$CF_2CF_2$-, -CH=CH-, -CF=CF-, -CH=CH-COO-, -OCO-CH=CH- oder -C≡C-, gegebenenfalls mit einem oder mehreren von F, S und/oder Si substituiert, sind,
s und t eine ganze Zahl von 1 bis 15 bedeutet und
u 0 oder 1 bedeutet.

2. Flüssigkristallmedium nach Anspruch 1, enthaltend eine, zwei, drei oder mehr Verbindungen der Formel III

$$R^{31}\text{-}A^{31}\text{-}A^{32}\text{-}Z^{31}\text{-}(CH_2)_z\text{-}Z^{32}\text{-}A^{33}\text{-}A^{34}\text{-}R^{32} \qquad \text{III}$$

bei der

$R^{31}$ und $R^{32}$ jeweils und unabhängig eine der Bedeutungen wie vorstehend für $R^{11}$ in Anspruch 1 gegeben besitzen,
$A^{31}$ bis $A^{34}$ jeweils und unabhängig eine der Bedeutungen wie vorstehend für $A^{11}$ in Anspruch 1 gegeben besitzen,
$Z^{31}$ und $Z^{32}$ jeweils unabhängig bei jedem Auftreten -COO-, -OCO-, -O-CO-O-, -$OCH_2$-, -$CH_2O$-, -$OCF_2$-, -$CF_2O$-, -$CH_2CH_2$-, -$(CH_2)_4$-, -$CF_2CF_2$-, -CH=CH-, -CF=CF-, -CH=CH-COO-, -OCO-CH=CH- oder -C≡C-, gegebenenfalls mit einem oder mehreren von F, S und/oder Si substituiert, sind und
z eine ganze Zahl von 1 bis 15 bedeutet.

3. Flüssigkristallmedium nach Anspruch 1 oder 2, enthaltend eine oder mehrere Verbindungen der Formel IV

$$R^{41}\text{-}A^{41}\text{-}A^{42}\text{-}Z^{41}\text{-}(CH2)_w\text{-}A^{43}\text{-}A^{44}\text{-}R^{42} \qquad \text{IV}$$

bei der

$R^{41}$ und $R^{42}$ jeweils und unabhängig eine der Bedeutungen wie vorstehend für $R^{11}$ in Anspruch 1 gegeben besitzen,
$A^{31}$ bis $A^{34}$ jeweils und unabhängig eine der Bedeutungen wie vorstehend für $A^{11}$ in Anspruch 1 gegeben besitzen,
$Z^{41}$ -O-, -COO-, -OCO-, -O-CO-O-, -$OCH_2$-, -$CH_2O$, -$CH_2CH_2$-, -$(CH_2)_4$-, -$CF_2CF_2$-, -CH=CH-, -CF=CF-, -CH=CH-COO-, -OCO-CH=CH- oder -C≡C-, gegebenenfalls substituiert mit einem oder mehreren von F, S und/oder Si, bedeutet und

w eine ganze Zahl von 1 bis 15 bedeutet.

**4.** Flüssigkristallmedium nach einem oder mehreren der Ansprüche 1 bis 3, enthaltend eine, zwei, drei oder mehr Verbindungen der Formel V

$$R^{51}\text{-}A^{51}\text{-}Z^{51}\text{-}A^{52}\text{-}(Z^{52}\text{-}A^{53})_l\text{-}(CH_2)_p\text{-}(A^{54}\text{-}Z^{53}\text{-})_m A^{55}\text{-}Z^{54}\text{-}A^{56}\text{-}R^{52} \qquad V$$

bei der

$R^{51}$ und $R^{52}$ jeweils und unabhängig eine der Bedeutungen wie vorstehend für $R^{11}$ in Anspruch 1 gegeben besitzen,
$A^{51}$ bis $A^{56}$ jeweils und unabhängig eine der Bedeutungen wie vorstehend für $A^{11}$ in Anspruch 1 gegeben besitzen,
$Z^{51}$ bis $Z^{54}$ jeweils und unabhängig -COO-, -OCO-, -O-CO-O-, $-OCH_2-$, $-CH_2O-$, $-CH_2CH_2-$, $-(CH_2)_4-$, $-OCF_2-$, $-CF_2O-$, $-CF_2CF_2-$, -CH=CH-, -CF=CF-, -CH=CH-COO-, -OCO-CH=CH- oder -C≡C-, gegebenenfalls mit einem oder mehreren von F, S und/oder Si substituiert, oder eine Einfachbindung bedeutet, mit der Maßgabe, dass mindestens einer von $Z^{51}$ bis $Z^{54}$ keine Einfachbindung ist,
p eine ganze Zahl von 1 bis 15 bedeutet und
l und m jeweils und unabhängig 0 oder 1 bedeutet.

**5.** Flüssigkristallmedium nach einem oder mehreren der Ansprüche 1 bis 4, enthaltend einen oder mehrere chirale Dotierstoffe.

**6.** Flüssigkristallmedium nach einem oder mehreren der Ansprüche 1 bis 5, enthaltend einen oder mehrere Zusatzstoffe, die ausgewählt sind aus der folgenden Formel VIII

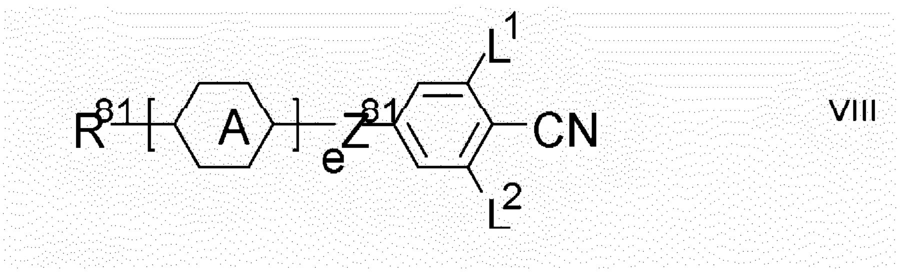

VIII

bei der

$R^{81}$ Alkyl, Alkoxy, Alkenyl oder Alkenyloxy mit bis zu 12 C-Atomen ist,

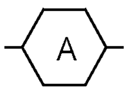

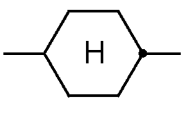 , 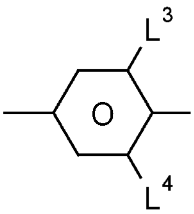 , 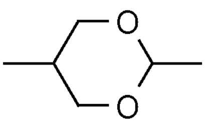 oder 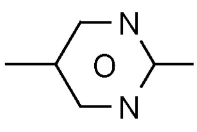 ist,

$L^1$ bis $L^4$ jeweils unabhängig H oder F sind,
$Z^{81}$ -COO-, $-CH_2CH_2-$ oder eine Einfachbindung ist und
e 1 oder 2 ist.

**7.** Flüssigkristallmedium nach einem oder mehreren der Ansprüche 1 bis 6, **dadurch gekennzeichnet, dass** die Menge der Verbindungen der Formel I in dem gesamten Medium bis zu 27% oder weniger beträgt.

**8.** Flüssigkristallmedium nach einem oder mehreren der Ansprüche 2 bis 7, **dadurch gekennzeichnet, dass** die Menge der Verbindungen der Formel III in dem gesamten Medium 10 bis 70 % beträgt.

**9.** Flüssigkristallmedium nach einem oder mehreren der Ansprüche 3 bis 8, **dadurch gekennzeichnet, dass** die Menge der Verbindungen der Formel IV in dem gesamten Medium 1 bis 15 % beträgt.

**10.** Flüssigkristallmedium nach einem oder mehreren der Ansprüche 4 bis 9, **dadurch gekennzeichnet, dass** die Menge der Verbindungen der Formel V in dem gesamten Medium 1 bis 20 % beträgt.

**11.** Flüssigkristallmedium nach einem oder mehreren der Ansprüche 5 bis 10, **dadurch gekennzeichnet, dass** die Menge der chiralen Verbindungen in dem gesamten Medium 1 bis 15 % beträgt.

**12.** Flüssigkristallmedium nach einem oder mehreren der Ansprüche 6 bis 11, **dadurch gekennzeichnet, dass** die Menge der Verbindungen der Formel VIII in dem gesamten Medium 1 bis 20 % beträgt.

**13.** Verfahren zur Herstellung eines Flüssigkristallmediums enthaltend die Schritte des Mischens von bis zu 30% oder weniger von einer oder mehreren Verbindungen der Formel I

$$R^{11}\text{-}A^{11}\text{-}A12\text{-}(CH2)_s\text{-}A^{13}\text{-}A^{14}\text{-}R^{12} \qquad I$$

mit mindestens 25% oder mehr von einer oder mehreren Verbindungen der Formel II

$$R^{21}\text{-}A^{21}\text{-}A^{22}\text{-}(A^{23})_u\text{-}Z^{21}\text{-}(CH_2)_t\text{-}Z^{22}\text{-}A^{24}\text{-}A^{25}\text{-}A^{26}\text{-}R^{22} \qquad II$$

bei denen $R^{11}$ bis $R^{22}$, $A^{11}$ bis $A^{26}$, $Z^{21}$, $Z^{22}$, s, t und u eine der Bedeutungen wie vorstehend in Anspruch 1 gegeben besitzen, wobei mindestens eine Verbindung aus Verbindungen der Formel III und/oder IV und/oder V ausgewählt ist.

**14.** Verwendung eines Flüssigkristallmediums nach einem oder mehreren der Ansprüche 1 bis 12 in einer Flüssigkristallvorrichtung.

**15.** Flüssigkristallvorrichtung enthaltend eine Flüssigkristallmedium nach einem oder mehreren der Ansprüche 1 bis 12.

**16.** Flüssigkristallvorrichtung nach Anspruch 15, **dadurch gekennzeichnet, dass** es sich um eine flexoelektrische Vorrichtung handelt.

**Revendications**

**1.** Milieu cristallin liquide comprenant un ou plusieurs composé(s) de la formule I,

$$R^{11}\text{-}A^{11}\text{-}A^{12}\text{-}(CH_2)_s\text{-}A^{13}\text{-}A^{14}\text{-}R^{12} \qquad I$$

selon une concentration jusqu'à 30 % ou moins,
et un ou plusieurs composé(s) de la formule II,

$$R^{21}\text{-}A^{21}\text{-}A^{22}\text{-}(A^{23})_u\text{-}Z^{21}\text{-}(CH_2)_t\text{-}Z^{22}\text{-}A^{24}\text{-}A^{25}\text{-}A^{26}\text{-}R^{22} \qquad II$$

selon une concentration de 25% ou plus,
dans lesquelles

$R^{11}$ à $R^{22}$ sont chacun de manière indépendante H, F, Cl, CN, NCS ou un groupe alkyle en chaîne droite ou ramifié, lequel peut être non substitué, mono- ou polysubstitué par halogène ou par CN, étant entendu qu'il est également possible qu'un ou que plusieurs groupe(s) $CH_2$ non adjacents soit/soient remplacé(s), pour chaque occurrence de manière indépendante les uns des autres, par -O-, -S-, -NH-, -N($CH_3$)-, -CO-, -COO-, -OCO-, -O-CO-O-, -S-CO-, -CO-S-, -CH=CH-, -CH=CF-, -CF=CF- ou -C=C- de telle sorte que des atomes d'oxygène ne soient pas liés directement les uns aux autres,
$A^{11}$ à $A^{26}$ sont chacun de manière indépendante pour chaque occurrence 1,4-phénylène, où en outre un ou plusieurs groupe(s) CH peut/peuvent être remplacé(s) par N, trans-1,4-cyclo-hexylène où, en outre, un ou deux

groupe(s) $CH_2$ non adjacents peut/peuvent être remplacé(s) par O et/ou S, 1,4-cyclohexénylène, 1,4-bicyclo-(2,2,2)-octylène, pipéridine-1,4-diyle, naphtalène-2,6-diyle, décahydro-naphtalène-2,6-diyle, 1,2,3,4-tétrahydro-naphtalène-2,6-diyle, cyclobutane-1,3-diyle, spiro[3.3]heptane-2,6-diyle ou dispiro-[3.1.3.1]décane-2,8-diyle, étant entendu qu'il est également possible que tous ces groupes soient non substitués, mono-, di-, tri- ou tétrasubstitués par F, Cl, CN ou des groupes alkyle, alcoxy, alkylcarbonyle ou alcoxycarbonyle, où un ou plusieurs atome(s) de H peut/peuvent être substitué(s) par F ou par Cl,
$Z^{21}$ et $Z^{22}$ sont chacun de manière indépendante pour chaque occurrence, COO-, -OCO-, -O-CO-O-, $-OCH_2-$, $-CH_2O-$, $-OCF_2-$, $-CF_2O-$, $-CH_2CH_2-$, $-(CH_2)_4-$, $-CF_2CF_2-$, -CH=CH-, -CF=CF-, -CH=CH-COO-, -OCO-CH=CH- ou -C≡C-, en option substitué par un ou par plusieurs de F, S et/ou Si,
s et t représentent un entier de 1 à 15, et
u représente 0 ou 1.

2. Milieu cristallin liquide selon la revendication 1, comprenant un, deux ou trois composé(s) ou plus de la formule III,

$$R^{31}\text{-}A^{31}\text{-}A^{32}\text{-}Z^{31}\text{-}(CH2)_z\text{-}Z^{32}\text{-}A^{33}\text{-}A^{34}\text{-}R^{32} \qquad \text{III}$$

dans laquelle

$R^{31}$ et $R^{32}$ présentent chacun et de manière indépendante l'une des significations telles que celles qui ont été données ci-avant pour $R^{11}$ selon la revendication 1,
$A^{31}$ à $A^{34}$ présentent chacun et de manière indépendante l'une des significations telles que celles qui ont été données ci-avant pour $A^{11}$ selon la revendication 1,
$Z^{31}$ et $Z^{32}$ sont chacun de manière indépendante pour chaque occurrence, -COO-, -OCO-, -O-CO-O-, $-OCH_2-$, $-CH_2O-$, $-OCF_2-$, $-CF_2O-$, $-CH_2CH_2-$, $-(CH_2)_4-$, $-CF_2CF_2-$,-CH=CH-, -CF=CF-, -CH=CH-COO-, -OCO-CH=CH- ou -C≡C-, en option substitué par un ou par plusieurs de F, S et/ou Si, et
z représente un entier de 1 à 15.

3. Milieu cristallin liquide selon la revendication 1 ou 2, comprenant un ou plusieurs composé(s) de la formule IV,

$$R^{41}\text{-}A^{41}\text{-}A^{42}\text{-}Z^{41}\text{-}(CH2)_w\text{-}A^{43}\text{-}A^{44}\text{-}R^{42} \qquad \text{IV}$$

dans laquelle

$R^{41}$ et $R^{42}$ présentent chacun et de manière indépendante l'une des significations telles que celles qui ont été données ci-avant pour $R^{11}$ selon la revendication 1,
$A^{31}$ à $A^{34}$ présentent chacun et de manière indépendante l'une des significations telles que celles qui ont été données ci-avant pour $A^{11}$ selon la revendication 1,
$Z^{41}$ représente -O-, -COO-, -OCO-, -O-CO-O-, $-OCH_2-$, $-CH_2O$, $-CH_2CH_2-$, $-(CH_2)_4-$, $-CF_2CF_2-$, -CH=CH-, -CF=CF-, -CH=CH-COO-, -OCO-CH=CH- ou -C≡C-, en option substitué par un ou par plusieurs de F, S et/ou Si, et
w représente un entier de 1 à 15.

4. Milieu cristallin liquide selon une ou plusieurs des revendications 1 à 3, comprenant un, deux ou trois composé(s) ou plus de la formule V,

$$R^{51}\text{-}A^{51}\text{-}Z^{51}\text{-}A^{52}\text{-}(Z^{52}\text{-}A^{53})_l\text{-}(CH_2)_p\text{-}(A^{54}\text{-}Z^{53}\text{-})_m A^{55}\text{-}Z^{54}\text{-}A^{56}\text{-}R^{52} \qquad \text{V}$$

dans laquelle

$R^{51}$ et $R^{52}$ présentent chacun et de manière indépendante l'une des significations telles que celles qui ont été données ci-avant pour $R^{11}$ selon la revendication 1,
$A^{51}$ à $A^{56}$ présentent chacun et de manière indépendante l'une des significations telles que celles qui ont été données ci-avant pour $A^{11}$ selon la revendication 1,
$Z^{51}$ à $Z^{54}$ représentent chacun et de manière indépendante -COO-, -OCO-, -O-CO-O-, $-OCH_2-$, $-CH_2O-$, $-CH_2CH_2-$, $-(CH_2)_4-$, $-OCF_2-$, $-CF_2O-$, $-CF_2CF_2-$, -CH=CH-, -CF=CF-, -CH=CH-COO-, -OCO-CH=CH- ou -C≡C-, en option substitué par un ou par plusieurs de F, S et/ou Si, ou une liaison simple, étant entendu qu'au moins l'un de $Z^{51}$ à $Z^{54}$ n'est pas une liaison simple,
p représente un entier de 1 à 15, et

l et m représentent chacun et de manière indépendante 0 ou 1.

**5.** Milieu cristallin liquide selon une ou plusieurs des revendications 1 à 4, comprenant un ou plusieurs dopant(s) chiral/chiraux.

**6.** Milieu cristallin liquide selon une ou plusieurs des revendications 1 à 5, comprenant un ou plusieurs additif(s) qui est/sont sélectionné(s) parmi la formule qui suit VIII,

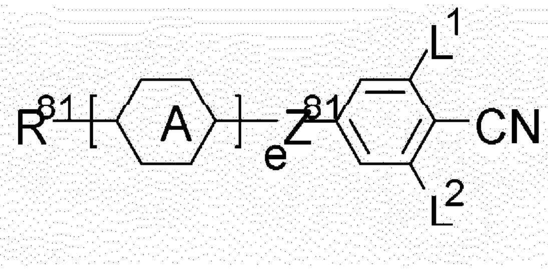

VIII

dans laquelle
$R^{81}$ est alkyle, alcoxy, alkényle ou alkényloxy avec jusqu'à 12 atomes de C,

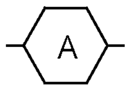

est

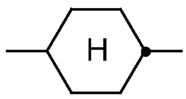, 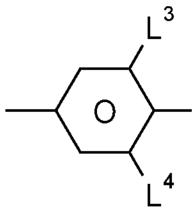, 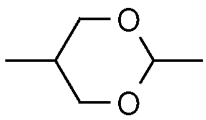 ou 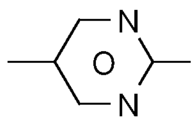,

$L^1$ à $L^4$ sont chacun de manière indépendante H ou F,
$Z^{81}$ est -COO-, $-CH_2CH_2-$ ou une liaison simple, et
e est 1 ou 2.

**7.** Milieu cristallin liquide selon une ou plusieurs des revendications 1 à 6, **caractérisé en ce que** la quantité de composés de la formule I dans le milieu pris dans sa globalité va jusqu'à 27 % ou moins.

**8.** Milieu cristallin liquide selon une ou plusieurs des revendications 2 à 7, **caractérisé en ce que** la quantité de composés de la formule III dans le milieu pris dans sa globalité va de 10 à 70 %.

**9.** Milieu cristallin liquide selon une ou plusieurs des revendications 3 à 8, **caractérisé en ce que** la quantité de composés de la formule IV dans le milieu pris dans sa globalité va de 1 à 15 %.

**10.** Milieu cristallin liquide selon une ou plusieurs des revendications 4 à 9, **caractérisé en ce que** la quantité de composés de la formule V dans le milieu pris dans sa globalité va de 1 à 20 %.

**11.** Milieu cristallin liquide selon une ou plusieurs des revendications 5 à 10, **caractérisé en ce que** la quantité de composés chiraux dans le milieu pris dans sa globalité va de 1 à 15 %.

**12.** Milieu cristallin liquide selon une ou plusieurs des revendications 6 à 11, **caractérisé en ce que** la quantité de composés de la formule VIII dans le milieu pris dans sa globalité va de 1 à 20 %.

**13.** Procédé pour la production d'un milieu cristallin liquide comprenant les étapes de mélange de jusqu'à 30 % ou

moins d'un ou de plusieurs composé(s) de la formule I,

$$R^{11}\text{-}A^{11}\text{-}A^{12}\text{-}(CH2)_s\text{-}A^{13}\text{-}A^{14}\text{-}R^{12} \qquad I$$

avec au moins 25 % ou plus d'un ou de plusieurs composé(s) de la formule II,

$$R^{21}\text{-}A^{21}\text{-}A^{22}\text{-}(A^{23})_u\text{-}Z^{21}\text{-}(CH_2)_t\text{-}Z^{22}\text{-}A^{24}\text{-}A^{25}\text{-}A^{26}\text{-}R^{22} \qquad II$$

dans lesquelles $R^{11}$ à $R^{22}$, $A^{11}$ à $A^{26}$, $Z^{21}$, $Z^{22}$, s, t, et u présentent l'une des significations telles que celles qui ont été données ci-avant selon la revendication 1, avec au moins un composé sélectionné parmi les composés des formules III, et/ou IV, et/ou V.

**14.** Utilisation d'un milieu cristallin liquide selon une ou plusieurs des revendications 1 à 12, dans un dispositif à cristaux liquides.

**15.** Dispositif à cristaux liquides comprenant un milieu cristallin liquide selon une ou plusieurs des revendications 1 à 12.

**16.** Dispositif à cristaux liquides selon la revendication15, **caractérisé en ce qu'**il s'agit d'un dispositif flexoélectrique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015074737 A
- WO 2016070952 A
- WO 2016116254 A
- WO 2016116124 A
- WO 2016116123 A
- EP 0971016 A
- GB 2356629 A
- WO 2013004333 A1
- WO 2013174481 A1
- WO 2014005672 A1
- WO 2013174478 A1
- WO 9800428 A
- GB 2328207 A


### Non-patent literature cited in the description


- **CHANDRASEKHAR.** Liquid Crystals. Cambridge University Press, 1992
- **P.G. DEGENNES et al.** The Physics of Liquid Crystals. Oxford Science Publications, 1995
- **COLES, H.J. ; MUSGRAVE, B. ; COLES, M.J. ; WILLMOTT, J.** *J. Mater. Chem.,* 2001, vol. 11, 2709-2716
- **LUCKHURST et al.** *J. Mat Chem.,* 2011, vol. 21, 12303-12308
- **LUCKHURST et al.** *J. Phys. Chem. B,* 2013, vol. 117 (21), 6547-6557
- **SELINGER.** *Phys. Rev.,* vol. 87, 52503
- **C. TSCHIERSKE ; G. PELZL ; S. DIELE.** *Angew. Chem.,* 2004, vol. 116, 6340-6368
- **P. RUDQUIST et al.** *Liq. Cryst.,* 1997, vol. 23 (4), 503